# EUROPÄISCHE PATENTANMELDUNG

(11) **EP 3 168 759 A1**
(43) Veröffentlichungstag der Anmeldung: **17.05.2017**
(21) Anmeldenummer: 16195048.0
(22) Anmeldetag: 21.10.2016
(51) Int. Cl.: G06F 17/30

(54) **VERFAHREN ZUM MANAGEN VON NUTZERDATEN, DIE IN EINEM ODER EINER MEHRZAHL VON VERSCHLÜSSELTEN DATENCONTAINERN ABGELEGT SIND, AUS EINER MEHRZAHL VON ANWENDUNGEN IN HERSTELLERUNABHÄNGIGER WEISE**

(30) Priorität: 11.11.2015 DE 102015222231
(71) Anmelder: Siemens Aktiengesellschaft, 80333 München (DE)
(72) Erfinder: Jäckel, Hubert, 01157 Dresden (DE)

(57) **Zusammenfassung**

Offenbart sind ein Verfahren und ein Datensystem (10) zum Managen von Nutzerdaten (34), die in einer oder einer Mehrzahl von Datencontainern (20) abgelegt sind, aus einer oder einer Mehrzahl von Datenanwendungen (14). Nutzerdaten (34) kommen in Form von strukturierten Datencontainern (20), die keine, eine oder eine Mehrzahl von Datentabellen (26) sowie mindestens einen Datenkopf (24) mit Strukturinformation bezüglich der Datentabellen (26) enthalten. Eine Datentabelle enthält eine strukturierte Anordnung (30) von typisierten Tabellenelementen (32) und jedes Tabellenelement (32) enthält Nutzerdaten (34) in typisierter Form. Datenköpfe enthalten, keinen, einen oder eine Mehrzahl von Verweisen auf die, und Strukturinformation von, im Datencontainer enthaltenen Datentabellen. Datenanwendungen (14) werden bereitgestellt, von denen jede dazu ausgebildet ist, mindestens eine der folgenden Funktionen auszuführen: Erzeugen, Löschen des Inhalts, Lesen des Inhalts, Schreiben des Inhalts, Erweitern um ein Inhaltselement oder Reduzieren um ein Inhaltselement, und zwar ein Inhaltselement von einem Datencontainer (20), einer Datentabelle (26), einem Datenkopf (24) oder eines Tabellenelements (32). Eine Programmbibliothek (40) wird bereitgestellt, die eines oder eine Mehrzahl von Programmfunktionen (42) enthält, und zwar mindestens eine Programmfunktion (42) als Implementierung für jede der von den Datenanwendungen ausführbaren Funktionen. Erfindungsgemäß verwendet jede Programmfunktion (42), insoweit sie auf eine externe Dienstfunktion zurückgreift, eine Dienstfunktion aus der Software-Plattform .NET; Datenanwendungen verwenden zum Ausführen der genannten Funktionen eine Programmfunktion aus der Programmbibliothek; und jeder Datencontainer, jede Datentabelle, jeder Datenkopf und/oder jedes Tabellenelement ist in einer Struktur dargestellt, die mit der erweiterbaren Auszeichnungssprache XML erzeugbar ist.

## Beschreibung

### Technisches Gebiet der Erfindung

Die vorliegende Erfindung bezieht sich auf ein Verfahren und ein System zum Managen von Nutzerdaten, die in einer oder einer Mehrzahl von Datencontainern abgelegt sind, aus einer oder einer Mehrzahl von Datenanwendungen. Typischerweise sind die Nutzerdaten technische Daten, wie etwa Gerätespezifikationen und -eigenschaften, von komplexen industriellen Einrichtungen, die Datencontainer an sicheren Installationsorten angeordnet, und die Datenanwendungen einer technischen Einrichtung zugeordnet. Anwendungen können jeglicher Form sein, die auf Daten zurückgreifen müssen, die von konstantem und/oder veränderbarem Inhalt sein können. Lediglich als Beispiel wird erwähnt, dass die Anwendungen Steuerungsanwendungen, Wartungsanwendungen oder Ersatzteilmanagementanwendungen sein können.

### Hintergrund

Im Stand der Technik ist bekannt, Nutzerdaten, wie etwa solche der eingangs genannten Art, in Datenbanken oder anderen Massenspeichereinrichtungen abzulegen und zu managen. Dabei ist die Auswahl einer Datenbank bzw. einer Speichereinrichtung für eine bestimmte Anwendung bestimmt von so verschiedenartigen Beweggründen und Parametern, wie etwa Komplexität und/oder Umfang der Daten, Flexibilität der Systemarchitektur von Anwendungen und Speichereinrichtungen, Betriebszuverlässigkeit von Speichereinrichtungen und/oder Datenbanken in Abhängigkeit vom Hersteller, Zeitpunkt der Anschaffung. Aufgrund der Verschiedenartigkeit der Beweggründe und Parameter, die die Auswahl eines Datenmanagementsystems beeinflussen, sind häufig bei einer technischen Einrichtung Datenbanken und Speichereinrichtungen von verschiedenen Herstellern und/oder mit verschiedenen Datenformaten, verschiedener implementierter Zugriffssoftware bzw. verschiedenen Technologien installiert. Dies führte häufig zur Ausbildung von verschiedenen "Insellösungen", was wiederum beispielsweise zu unterschiedlichen Bedienoberflächen, Wartungsanforderungen, Speichersystemen und/oder Datenformaten führte.

Infolge der vorgenannten Diversität installierter Systeme findet man in den Softwareanwendungen als Eingangsdaten häufig in den Quelltexten "fest" kodierte Parameterwerte, etwa für Berechnungen oder als Sollwerte im Rahmen von technischen Richtlinien, usw. Diese Art der Eingangsdatenzufuhr hat den Nachteil, dass zum Ändern der Werte der Quelltext der Software geändert und diese mit den geänderten Eingangsdaten neu kompiliert und installiert werden muss. Gemäß einer anderen, geläufigen Form, Softwareanwendungen Eingangsdaten zuzuführen, werden Dateien mit den Daten wie Textdateien erstellt (z.B. Textdateien mit dem Dateisuffix .ini). Dabei sind die Eingabedaten von einem Nutzer lediglich unter Verwendung eines gewöhnlichen Texteditors und ohne weitere komplexere Hilfsmittel lesbar und änderbar. Nachteilig bei dieser Form ist, dass zum Übertragen der Eingabedaten von der Textdatei in die Softwareanwendung individuell auf das jeweilige Textdateiformat und die jeweilige Softwareanwendung zugeschnittene Softwaremodule erstellt und verwendet werden müssen.

Vor dem Hintergrund der genannten Nachteile bei der Datenpflege und -eingabe in herkömmlichen Anwendungen ist es seine Aufgabe der vorliegenden Erfindung, ein Datensystem zu schaffen, bei dem in einer kostengünstigen Weise Daten zwischen Datenbanken und Softwareanwendungen derart übertragen werden können, ohne dass beim Abspeichern in Datenbanken und zum Übertragen verschiedenartige, vom Hersteller und/oder System abhängige Datenformate eingehalten werden müssen, und wobei die Daten für einen Nutzer ohne komplexere Hilfsmittel leicht lesbar und änderbar sind.

### Zusammenfassung der Erfindung

Die Aufgabe wird gelöst durch ein Verfahren zum Managen von Nutzerdaten gemäß dem beigefügten unabhängigen Anspruch 1 und ein Datensystem zum Managen von Nutzerdaten gemäß dem beigefügten unabhängigen Anspruch 11.

Gemäß einem ersten Aspekt der Erfindung wird ein Verfahren bereitgestellt zum Managen von Nutzerdaten, die in einer oder einer Mehrzahl von Datencontainern abgelegt sind, aus einer oder einer Mehrzahl von Datenanwendungen. Das Verfahren umfasst folgende Schritte:
[A] Bereitstellen von Nutzerdaten in der Form von einem oder mehreren strukturierten Datencontainern, wobei jeder Datencontainer dazu ausgebildet ist, keine, eine oder eine Mehrzahl von Datentabellen sowie mindestens einen Datenkopf mit Strukturinformation bezüglich der Datentabellen zu enthalten, wobei eine Datentabelle eine strukturierte Anordnung von typisierten Tabellenelementen enthält und jedes Tabellenelement Nutzerdaten in typisierter Form enthält, wobei der mindestens eine Datenkopf dazu ausgebildet ist, keinen, einen oder eine Mehrzahl von Verweisen auf die, und Strukturinformation von den, im Datencontainer enthaltenen Datentabellen zu enthalten,
[B] Bereitstellen von einer oder einer Mehrzahl von Datenanwendungen, von denen jede dazu ausgebildet ist, mindestens eine der folgenden Funktionen auszuführen: Erzeugen, Löschen des Inhalts, Lesen des Inhalts, Schreiben des Inhalts, Erweitern um ein Inhaltselement oder Reduzieren um ein Inhaltselement, und zwar ein Inhaltselement von einem Datencontainer, einer Datentabelle, einem Datenkopf oder eines Tabellenelements, und
[C] Bereitstellen von einer Programmbibliothek, die ein oder eine Mehrzahl von Programmfunktionen enthält, und zwar mindestens eine Programmfunktion als Implementierung für jede der im Schritt [B] genannten Funktionen.

Erfindungsgemäß verwendet dabei jede Programmfunktion, insoweit sie auf eine externe Dienstfunktion zurückgreift, eine Dienstfunktion aus der Software-Plattform .NET. Ferner verwendet eine Datenanwendung zum Ausführen von einer im Schritt [B] genannten Funktion eine Programmfunktion aus der Programmbibliothek. Noch ferner ist dabei jeder Datencontainer, jeder Datenkopf, jede Datentabelle und/oder jedes Tabellenelement in einer Struktur dargestellt, die mit der erweiterbaren Auszeichnungssprache XML erzeugbar ist.

Gemäß einem zweiten Aspekt der Erfindung wird ein Datensystem bereitgestellt zum Managen von Nutzerdaten, die in einer oder einer Mehrzahl von Datencontainern abgelegt sind, aus einer oder einer Mehrzahl von Datenanwendungen. Das System weist folgendes auf:
eine oder eine Mehrzahl von Datenspeichereinrichtungen, in der mindestens einen strukturierten Datencontainer abgelegt ist, wobei jeder Datencontainer dazu ausgebildet ist, keine, eine oder eine Mehrzahl von Datentabellen sowie mindestens einen Datenkopf mit Strukturinformation bezüglich der Datentabellen zu enthalten, wobei eine Datentabelle eine strukturierte Anordnung von typisierten Tabellenelementen enthält und jedes Tabellenelement Nutzerdaten in typisierter Form enthält, wobei der mindestens eine Datenkopf dazu ausgebildet ist, keinen, einen oder eine Mehrzahl von Verweisen auf die, und Strukturinformation von den, im Datencontainer enthaltenen Datentabellen zu enthalten,
eine oder eine Mehrzahl von Anwendungsspeichereinrichtungen, in der eine oder eine Mehrzahl von Datenanwendungen abgelegt ist, von denen jede dazu ausgebildet ist, mindestens eine der folgenden Funktionen auszuführen: Erzeugen, Löschen des Inhalts, Lesen des Inhalts, Schreiben des Inhalts, Erweitern um ein Inhaltselement oder Reduzieren um ein Inhaltselement, und zwar ein Inhaltselement von einem Datencontainer, einer Datentabelle, einem Datenkopf oder eines Tabellenelements, und
eine Bibliothekspeichereinrichtung, in der mindestens eine Programmbibliothek abgelegt ist, die eines oder eine Mehrzahl von Programmfunktionen als Implementierung von jeder der von der einen oder der Mehrzahl der Datenanwendungen ausführbaren Funktionen aufweist.

Erfindungsgemäß ist dabei jede Programmfunktion so ausgebildet, dass sie, insoweit es auf eine externe Dienstfunktion zurückgreift, eine Dienstfunktion aus der Software-Plattform .NET verwendet. Ferner verwendet eine Datenanwendung zum Ausführen von einer der zuvor genannten Funktion eine Programmfunktion aus der Programmbibliothek. Noch ferner ist dabei jeder Datencontainer, jeder Datenkopf, jede Datentabelle und/oder jedes Tabellenelement in einer Struktur dargestellt, die mit der erweiterbaren Auszeichnungssprache XML erzeugbar ist.

Das Bereitstellen der Programmbibliothek mit den darin enthaltenen Programmfunktionen als jeweilige Implementierung einer von einer Datenanwendung ausführbaren Funktion (Datenmanagement-Funktion) ermöglicht, dass eine bestimmte Programmfunktion in einfacher Weise aktualisiert oder überarbeitet werden kann, und zwar ohne Auswirkung auf die übrigen Programmfunktionen.

Mit dem Begriff "Strukturinformation" ist hierin Information gemeint, die die logische Struktur einer Datentabelle beschreibt. Demgemäß kann Strukturinformation eines oder mehrere der folgenden umfassen: eine Angabe, dass in dem Datencontainer eine Datentabelle vorhanden ist; ein Name einer Datentabelle, eine Liste der Feldnamen der Datentabelle und ein einem Feld zugeordneter Felddatentypen.

Mit dem Begriff "Inhaltselement" ist hierin folgendes gemeint: für einen Datencontainer ein darin enthaltener Datensatz, für einen Datenkopf ein darin enthaltener Verweis auf eine in demselben Datencontainer enthaltene Datentabelle oder Strukturinformation bezüglich einer in demselben Datencontainer enthaltenen Datentabelle, für eine Datentabelle eine darin enthaltene strukturierte Anordnung von Tabellenelementen oder ein in der Datentabelle enthaltenes Tabellenelement.

In der vorliegenden Offenbarung der Erfindung und in den beigefügten Ansprüchen sind Bezeichner in Aufzählungen zwischen eckigen Klammern, d.h. den Zeichen "[" und "]", gesetzt. Die hierin eingeführten Bezeichner dienen dazu, an anderer Stelle Verweise auf damit bezeichnete Merkmale in kompakter Form auszudrücken. Insbesondere sind Schritte des Verfahrens gemäß dem ersten Aspekt der Erfindung mit den Bezeichnern [A], [B], [C] aufgezählt. Des Weiteren sind in abhängigen Ansprüchen und im nachfolgenden Abschnitt "Vorteile der Erfindung" konkreten Benennungen von Datenfunktionen der Datenanwendungen die Bezeichner [1a], [1b],... [2a], [2b],... bis [6a], [6b],... zugeordnet. Dabei sind die unterschiedlichen Ziffern (1, 2,...,6) unterschiedlichen Arten von Funktionen (wie beispielsweise Erzeugen, Löschen, Lesen, Schreiben) und die unterschiedlichen, in kleiner Schriftart gesetzten Buchstaben (a, b,...,e) unterschiedlichen Inhaltselementen zugeordnet. In den Ansprüchen sind, in üblicher Weise und zur Abgrenzung gegenüber den Bezeichnern, Bezugszeichen auf Elemente in den beigefügten Figuren zwischen runden Klammern, d.h. den Zeichen "(" und ")", gesetzt.

Der Begriff ".NET" (ausgesprochen wie: "dott nett") bezeichnet eine von der Firma Microsoft entwickelte Software-Plattform zur Entwicklung und Ausführung von Anwendungsprogrammen..NET umfasst eine Laufzeitumgebung (in Englisch genannt: *Common Language Runtime* (CLR)), in der die Programme ausgeführt werden, und ferner eine Sammlung (in Englisch genannt: *Base Class Library* (BCL)) von Klassenbibliotheken, Programmierschnittstellen und Dienstprogrammen (in Englisch genannt: "*Services*") sowie diverse Hilfsprogramme, beispielsweise zur Rechteverwaltung..NET ist auf einer Vielzahl von Plattformen verfügbar und unterstützt die Verwendung einer Vielzahl von Programmiersprachen. .NET-Programme werden zum Kompilierungszeitpunkt zunächst in eine Zwischensprache (in Englisch genannt: *Common Intermediate Language)* übersetzt. Wenn die so erzeugten Kompilate ausgeführt werden, wird der Code von der .NET-Laufzeitumgebung in die eigentliche Maschinensprache des Zielsystems übersetzt. Diese Übersetzung geschieht mit Hilfe eines sogenannten "*Just-In-Time-Compilers*". Für die Entwicklung von .NET-Programmen stellt die Firma Microsoft ein "*visual Studio"* genanntes Softwarepaket bereit. Große Teile von .NET, insbesondere die Laufzeitumgebung und die Klassenbibliotheken, wurden unter dem Namen *"Common Language Infrastructure*" (CLI) als ECMA-Standard normiert. Die offizielle Webseite der .NET Plattform ist erreichbar unter "http://msdn.microsoft.com/de-de/netframework/default.aspx".

Der hierin verwendete Begriff "Datencontainer" ist eine Übertragung in die deutsche Sprache der in .NET bereitgestellten Datenstruktur "*DataContainer*" und deutet die Verwendbarkeit des Datencontainers als Ausführungsform einer Datenbank an.

Der hierin verwendete Begriff "Datenkopf" ist eine Übertragung in die deutsche Sprache der in .NET bereitgestellten Schema-Information aus der Datenklasse "*DataSet*". Speichertechnisch gesehen ist die Datenklasse "DataSet" ein speicherinterner Datencache, genauer ein aus einer Datenquelle abgerufener Datencache im Arbeitsspeicher des ein .NET-Dienstprogramm ausführenden Rechnersystems dar.

Der hierin verwendete Begriff "Datentabelle" ist eine Übertragung in die deutsche Sprache der in .NET bereitgestellten Datenstruktur *"DataTable".* Diese kann Nutzerdaten enthalten in Form einer strukturierten Anordnung, wie etwa Tabellenzeilen oder Tabellenspalten, von Tabellenelementen. Die Tabellenelemente wiederum können typisierte Daten, d.h. Daten in einer der typisierten Formen von Zeichenketten (Strings), numerischen Daten oder einem Boole'schen Wert (d.h. eine Zeichenkette mit dem Wert "wahr" oder "falsch", der als Boole'scher Wert TRUE oder FALSE oder als "1" oder "0" interpretiert wird, enthalten.

Ein Datenkopf kann eine Auflistung enthalten von Datentabellen (oder "*DataTable*"-Objekten), in der Form einer Liste mit den Namen der Datentabellen, die in einem Datencontainer (oder *"Container"*) enthalten sind.

Der hierin verwendete Begriff "Programmfunktion" ist eine Bezeichnung in deutscher Sprache für ein in der Programmbibliothek abgelegte und Dienstfunktionen aus der Software-Plattform .NET verwendende Funktion, was in der Fachsprache auch als Methode bezeichnet wird.

Ein Vorteil der bei den Programmfunktionen ausschließlichen Verwendung von Diensten der Software-Plattform .NET ist, dass keine Kosten für die Bereitstellung von individueller Fremdsoftware anfallen. Ein weiterer Vorteil ist, dass beim Verwenden der gut dokumentierten .NET-Dienste der Nutzer genaue Kenntnisse in Bezug auf die interne Darstellung und Behandlung von Daten innerhalb der Datencontainer hat.

Ein Datensatz (oder *"DataSet"*) kann Nutzerdaten sowie das Schema als ein XML-Dokument lesen und schreiben. Das XML-Dokument mit den Daten und dem Schema kann dann mit einem Texteditor oder mit einem standardmäßigen XML-Datenbearbeitungswerkzeug für einen Nutzer lesbar und bearbeitbar dargestellt werden, und ferner von sämtlichen Anwendungen auf allen XML-fähigen Plattformen verwendet werden.

Der hierin verwendete Begriff "erweiterte Auszeichnungssprache" ist eine Übertragung in die deutsche Sprache des englischsprachigen Begriffs *"Extensible Markup Language",* der mit XML abgekürzt wird. Allgemein bezeichnet eine erweiterte Auszeichnungssprache (oder XML) eine Auszeichnungssprache zur Darstellung von hierarchisch strukturierten Daten in der Form von Textdateien. Eine XML kann unter anderem für einen plattform- und implementationsunabhängigen Austausch von Nutzerdaten zwischen Speichereinrichtungen und Rechensystemen (oder Computersystemen) eingesetzt werden. Der Austausch kann insbesondere über das Internet oder lokales Netzwerk verwendet werden.

Der Begriff XML hat sich im speziellen eingebürgert für eine vom "World Wide Web Consortium (W3C) als Standard herausgegebene XML-Spezifikation *(W3C Recommendation,* erste Ausgabe vom 10. Februar 1998, derzeit aktuell ist die fünfte Ausgabe vom 26. November 2008). Die offizielle Publikation des W3C über XML findet sich unter "http://www.w3.org/XML" in englischer Version, in deutscher Übersetzung unter "http://www.edition-w3c.de/". Die XML-Spezifikation definiert eine Metasprache, auf deren Basis durch strukturelle und inhaltliche Einschränkungen anwendungsspezifische Sprachen definiert werden. Ein XML-Dokument trägt einen Dateinamen mit der Dateiendung ".xml". Es enthält Textzeichen, im einfachsten Fall in ASCII-Kodierung, und ist daher von einem Nutzer leicht lesbar. Binärdaten enthält ein XML-Dokument per Definition nicht.

Für eine vollständige Darstellung von für XML und XML-Dateien typischen und vorteilhaften Eigenschaften wird verwiesen auf die oben genannten offiziellen Internetseiten des W3C, für eine Übersicht auf
"https://de.wikipedia.org/wiki/Extensible_Markup_Language" oder für eine Kurzübersicht auf
"http://www.selfxml.de/index/.php/begriffe". Zu diesen Eigenschaften gehören die dem Fachmann bekannten Konzepte Markup, Element, Struktur, Document Type Definition (DTP), XML-Schema, Wohlgeformtheit, Gültigkeit (Validität), Parser, Processing Instruction (PI), Versionsdeklaration und Dokumenttyp-Deklaration.

Ein Vorteil, alle verwendeten Datenstrukturen, d.h. Datencontainer, Datentabelle, Datenkopf und Tabellenelement, in einer Struktur darzustellen, die mit XML erzeugt werden kann, ist, dass dadurch wiederum eine plattformunabhängige Darstellung der Nutzerdaten implementiert ist. Ein weiterer Vorteil ist, dass beim Verwenden der ausführlich dokumentierten XML-Spezifikation der Nutzer genaue Kenntnisse in Bezug auf die Architektur der verwendeten Datenstrukturen und die Darstellung von Daten innerhalb der Datenstrukturen hat.

Zum Übertragen von Nutzerdaten in das Datensystem gemäß dem zweiten Aspekt und als Grundlage für die Anwendung des Verfahrens gemäß dem ersten Aspekt werden noch die folgenden Hilfsverfahren bereitgestellt.

Wie im beigefügten, unabhängigen Anspruch 9 definiert und gemäß einem dritten Aspekt wird ein Verfahren bereitgestellt zum Umwandeln von einer beliebigen Datenbank in einen strukturierten Datencontainer, der zum Ausführen des Verfahrens gemäß dem ersten Aspekt ausgebildet ist. Dabei ist jeder Datencontainer dazu ausgebildet, keine, eine oder eine Mehrzahl von Datentabellen sowie mindestens einen Datenkopf mit Strukturinformation bezüglich der Datentabellen zu enthalten. Ferner enthält dabei eine Datentabelle eine strukturierte Anordnung von typisierten Tabellenelementen enthält und jedes Tabellenelement Nutzerdaten in typisierter Form, wobei der mindestens eine Datensatz dazu ausgebildet ist, keinen, einen oder eine Mehrzahl von Verweisen auf die, und Strukturinformation von den, im Datencontainer enthaltenen Datentabellen zu enthalten.

Als Grundlage für die Ausführung der Erfindung in Form des Verfahrens gemäß dem ersten Aspekt und des Datensystems gemäß dem zweiten Aspekt ist in dem Verfahren gemäß dem dritten Aspekt jeder Datencontainer, jede Datentabelle, jeder Datenkopf und/oder jedes Tabellenelement in einer Struktur dargestellt, die mit der erweiterbaren Auszeichnungssprache XML erzeugbar ist. Des Weiteren unterliegt dabei jeder einzelne Datencontainer, jede einzelne Datentabelle, jeder einzelne Datenkopf und/oder jedes einzelne Tabellenelement zumindest einer ersten Verschlüsselung, die dahingeht, dass auf den Datencontainer, die Datentabelle, den Datenkopf und/oder das Tabellenelement nur über eine vorgegebene Schnittstelle in Form einer Programmfunktion aus der Programmbibliothek zugegriffen werden kann.

Als weitere Grundlage für die Ausführung der Erfindung kann sicherstellt werden, dass ein Datencontainer, eine Datentabelle, ein Datenkopf und/oder ein Tabellenelement nur mit einem Bearbeitungswerkzeug bearbeitet werden kann, welches gewährleistet, dass seine/seine/ihre/seine in der Auszeichnungssprache XML dargestellte Struktur erhalten bleibt.

Wie im beigefügten, unabhängigen Anspruch 10 definiert und gemäß einem vierten Aspekt wird ein Verfahren bereitgestellt zum Umwandeln von einer beliebigen Anwendung, die dazu ausgebildet ist, Nutzerdaten, die in beliebigen Datenbanken gespeichert sind, zu managen, in eine Datenanwendung, die zum Ausführen des Verfahrens gemäß dem ersten Aspekt der Erfindung ausgebildet ist und die ferner dazu ausgebildet ist, Nutzerdaten, die in einem aus der beliebigen Datenbank durch Anwenden des Verfahrens gemäß dem dritten Aspekt der Erfindung hervorgegangenen Datencontainer gespeichert sind, zu managen. Dabei ruft jede Datenanwendung anstelle von einem Programm zum Zugreifen auf die beliebige Datenbank eine Programmfunktion auf, die in einer Programmbibliothek bereitgestellt ist. Die Programmbibliothek enthält eine Mehrzahl von Programmfunktionen, und zwar mindestens eine Programmfunktion als Implementierung für jede der von den Datenanwendungen aufrufbaren Funktionen.

Ein jeweiliger Aufruf von einer Programmfunktion durch eine Datenanwendung kann dadurch implementiert werden, dass die Programmfunktion in die Datenanwendung sogenannt "eingebunden" wird. Ein Fachmann weiß, wie derartige Aufrufe bzw. Einbindungen in einer Software implementiert werden können.

Als Grundlage für die Ausführung der Erfindung in Form des Verfahrens gemäß dem ersten Aspekt und des Datensystems gemäß dem zweiten Aspekt verwendet in dem Verfahren gemäß dem vierten Aspekt jede Programmfunktion, insoweit sie auf eine externe Dienstfunktion zurückgreift, eine Dienstfunktion aus der Software-Plattform .NET.

Die sich aus der Verwendung der Software-Plattform .NET ergebenden Vorteile wurden oben bereits erläutert.

### Vorteile der Erfindung

In dem Verfahren gemäß dem ersten Aspekt, im Schritt [B], kann mindestens eine Datenanwendung dazu ausgebildet sein, mindestens eine der folgenden Funktionen auszuführen:
[1a] Erzeugen oder [2a] Löschen des Inhalts von einem Datencontainer,
[1b] Erzeugen oder [2b] Löschen des Inhalts von einem Verweis in einem Datenkopf,
[1c] Erzeugen oder [2c] Löschen des Inhalts von einer Datentabelle,
[1d] Erzeugen oder [2d] Löschen des Inhalts von einem Tabellenelement,
[3a] Lesen des Inhalts von einem Datencontainer oder [4a] Schreiben von Inhalt in einen Datencontainer,
[3b] Lesen des Inhalts von einem oder [4b] Schreiben von einem Verweis in einen Datensatz,
[3c] Lesen des Inhalts von einer oder [4c] Schreiben von Inhalt in eine Datentabelle,
[3d] Lesen des Inhalts von einem Tabellenelement oder [4d] Schreiben von Inhalt in ein Tabellenelement,
[5a] Hinzufügen oder [6a] Löschen von einem Datencontainer,
in einem Datencontainer, [5b] Hinzufügen oder [6b] Löschen von einem Datenkopf,
in einem Datencontainer, [4c] Hinzufügen oder [6c] Löschen von einer Datentabelle,
in einem Datensatz, [5d] Hinzufügen oder [6d] Löschen von einem Verweis auf eine Datentabelle, oder
in einer Datentabelle, [5e] Hinzufügen oder [6e] Löschen von einer strukturierten Anordnung von Tabellenelementen.

Die vorgenannten Funktionen enthalten die wichtigsten Formen bzw. Arten von Zugriffen auf die in einem Datencontainer, in einer Datentabelle, einem Datenkopf oder einem Tabellenelement gespeicherten Nutzerdaten.

In einer Ausführungsform kann beim Lesen des Inhalts einer Datenstruktur, insbesondere bei den Funktionen [3a] bis [3d], der Inhalt der Datenstruktur in den Arbeitsspeicher des Rechensystems, in dem die die Funktion aufrufende Datenanwendung ablaufbar abgelegt ist (bzw. ausgeführt wird), geschrieben werden und dort für die Datenanwendung zur Verfügung stehen.

In einer dazu alternativen Ausführungsform kann zum Lesen des Inhalts einer Datenstruktur, insbesondere bei den Funktionen [3a] bis [3d], lediglich ein Namen der zu lesenden Datenstruktur, beispielsweise über den Arbeitsspeicher des Rechensystems, in dem das die Funktion implementierende Methodenmodul ablaufbar abgelegt ist (bzw. ausgeführt wird), an die Programmfunktion übergeben werden. Die Programmfunktion kann mit Kenntnis des Namens der Datenstruktur den Inhalt der Datenstruktur lesen und anschließend den Inhalt der Datenstruktur in den Arbeitsspeicher des Rechensystems, in dem die die Funktion aufrufende Datenanwendung ablaufbar abgelegt ist (bzw. ausgeführt wird), schreiben oder direkt an die die Programmfunktion aufrufende Datenanwendung übergeben.

In dem Verfahren gemäß dem ersten Aspekt kann jeder einzelne Datencontainer, jede einzelne Datentabelle, jeder einzelne Datenkopf und/oder jedes einzelne Tabellenelement zumindest einer ersten Verschlüsselung unterliegen, die dahingeht, dass auf den Datencontainer, die Datentabelle, den Datenkopf und/oder das Tabellenelement nur über eine Programmfunktion aus der Programmbibliothek zugegriffen werden kann.

Ferner können in dem Verfahren gemäß dem ersten Aspekt mindestens ein Datencontainer, eine Datentabelle, ein Datenkopf und/oder ein Tabellenelement einer doppelten Verschlüsselung unterliegen. Die zweite Verschlüsselung kann dahingehen, einen Schutz gegen nicht-autorisierte Benutzung von Nutzerdaten zu gewährleisten. Des Weiteren kann dabei der Schlüssel zum Entschlüsseln der zweiten Verschlüsselung in einer Programmfunktion der Programmbibliothek oder in einer Datenanwendung abgelegt (oder fest codiert) sein oder bei einem Aufruf einer Programmfunktion durch eine Datenanwendung über eine Eingabemaske von einem Nutzer eingegeben werden.

Im Hinblick auf die Implementierung des Verfahrens gemäß dem ersten Aspekt in einem Datensystem können mindestens zwei Datenanwendungen in zwei verschiedenen Anwendungsspeichereinrichtungen ausführbar abgelegt sein. Die Programmbibliothek kann in einer gesonderten Bibliothekspeichereinrichtung abgelegt sein, in der nicht irgendeine der Datenanwendungen abgelegt ist. Ferner kann von mindestens einer Programmfunktion der Programmbibliothek, das einer oder mehreren bestimmten Datenanwendungen zugeordnet ist, eine Kopie in einer Anwendungsspeichereinrichtung ausführbar sein, in der die bestimmte Datenanwendung abgelegt ist.

Zum Interagieren mit Drittsystemen kann in dem Verfahren gemäß dem ersten Aspekt für die Funktion [3a] vorgesehen sein, dass der gelesene Inhalt in einen externen Datenspeicher exportiert wird, und für die Funktion [4a] kann vorgesehen sein, dass der geschriebene Inhalt vor dem Schreiben aus einem externen Datenspeicher importiert wird.

In dem Datensystem gemäß dem zweiten Aspekt der Erfindung kann mindestens eine Datenanwendung dazu ausgebildet sein, mindestens eine der folgenden Funktionen auszuführen:
[1a] Erzeugen oder [2a] Löschen des Inhalts von einem Datencontainer,
[1b] Erzeugen oder [2b] Löschen des Inhalts von einem Verweis in einem Datenkopf,
[1c] Erzeugen oder [2c] Löschen des Inhalts von einer Datentabelle,
[1d] Erzeugen oder [2d] Löschen des Inhalts von einem Tabellenelement,
[3a] Lesen des Inhalts von einem Datencontainer oder [4a] Schreiben von Inhalt in einen Datencontainer,
[3b] Lesen des Inhalts von einem oder [4b] Schreiben von einem Verweis in einen Datenkopf,
[3c] Lesen des Inhalts von einer oder [4c] Schreiben von Inhalt in eine Datentabelle,
[3d] Lesen des Inhalts von einem Tabellenelement oder [4d] Schreiben von Inhalt in ein Tabellenelement,
[5a] Hinzufügen oder [6a] Löschen von einem Datencontainer,
in einem Datencontainer, [5b] Hinzufügen oder [6b] Löschen von einem Datenkopf,
in einem Datencontainer, [5c] Hinzufügen oder [6c] Löschen von einer Datentabelle,
in einem Datenkopf, [5d] Hinzufügen oder [6d] Löschen von einem Verweis auf eine Datentabelle, oder
in einer Datentabelle, [5e] Hinzufügen oder [6e] Löschen von einer strukturierten Anordnung von Tabellenelementen. Wie bereits erwähnt, enthalten die vorgenannten Funktionen die wichtigsten Formen bzw. Arten von Zugriff auf die in einem Datencontainer, in einer Datentabelle, einem Datenkopf oder einem Tabellenelement gespeicherten Nutzerdaten.

In dem Datensystem gemäß dem zweiten Aspekt kann jeder einzelne Datencontainer, jede einzelne Datentabelle, jeder einzelne Datenkopf und/oder jedes typisierte Tabellenelement zumindest einer ersten Verschlüsselung unterliegen, die dahingeht, dass auf den Datencontainer, die Datentabelle, den Datenkopf und/oder das Tabellenelement nur über eine Programmfunktion aus der Programmbibliothek zugegriffen werden kann.

In dem Datensystem gemäß dem zweiten Aspekt kann mindestens ein Datencontainer, eine Datentabelle, ein Datenkopf und/oder ein Tabellenelement einer doppelten Verschlüsselung unterliegen. Die zweite Verschlüsselung kann dahingehen, einen Schutz gegen nicht-autorisierte Benutzung von Nutzerdaten zu gewährleisten. Dabei kann der Schlüssel zum Entschlüsseln der zweiten Verschlüsselung in einer Programmfunktion der Programmbibliothek oder in einer Datenanwendung abgelegt sein.

In dem Verfahren gemäß dem ersten Aspekt und in dem Datensystem gemäß dem zweiten Aspekt kann sichergestellt sein, dass zum inhaltlichen Editieren jeder Datencontainer, jede Datentabelle, jeder Datenkopf und/oder jedes Tabellenelement nur mit einem Bearbeitungswerkzeug bearbeitet werden kann, welches gewährleistet, dass seine/ihre/seine/seine in der Auszeichnungssprache XML dargestellte Struktur erhalten bleibt. Somit wird die Integrität der Datencontainer, der Datentabellen, der Datenköpfe und/oder der Tabellenelemente als XML Dateien sichergestellt.

Im Hinblick auf die Implementierung des Datensystems gemäß dem zweiten Aspekt können mindestens zwei Datenanwendungen in zwei verschiedenen Anwendungsspeichereinrichtungen ausführbar abgelegt sein. Dabei kann die Programmbibliothek in einer gesonderten Bibliothekspeichereinrichtung abgelegt sein, in der nicht irgendeine der Datenanwendungen abgelegt ist. Ferner kann dabei von mindestens einer Programmfunktion der Programmbibliothek, das einer oder mehr bestimmten Datenanwendungen zugeordnet ist, eine Kopie in einer Anwendungsspeichereinrichtung ausführbar sein, in der die bestimmte Datenanwendung abgelegt ist.

Zum Interagieren mit Drittsystemen kann in dem Datensystem gemäß dem zweiten Aspekt für die Funktion [3a] "Lesen des Inhalts von einem Datencontainer" vorgesehen sein, dass der gelesene Inhalt in einen externen Datenspeicher exportiert wird. Für die Funktion [4a] "Schreiben von Inhalt in einen Datencontainer" kann vorgesehen sein, dass der geschriebene Inhalt vor dem Schreiben aus einem externen Datenspeicher importiert wird.

In dem Verfahren gemäß dem ersten Aspekt und in dem Datensystem gemäß dem zweiten Aspekt der Erfindung können einer Datenanwendung ein Anwendungsname, einem Datencontainer ein Datencontainername, einer Datentabelle ein Tabellenname, einer strukturierten Anordnung von Tabellenelementen ein Anordnungsname, wie etwa ein Spaltenname oder ein Zeilenname, einem Tabellenelement ein Elementname und/oder einem Methodenmodul ein Methodenmodulname zugeordnet werden.

In dem Verfahren gemäß dem ersten Aspekt und in dem Datensystem gemäß dem zweiten Aspekt der Erfindung kann eine in der Programmbibliothek bereitgestellte Programmfunktion einen oder mehrere der folgenden Parameter verwenden:
- der Namen eines Datencontainers,
- eine Pfadangabe (Verzeichnisangabe) für den logischen Ablageort von einem Datencontainer in einer Verzeichnisstruktur (oder dem Verzeichnisbaum) in einer Datenspeichereinrichtung,
- der Namen einer bestimmten Datentabelle in einem Datencontainer,
- Filterbedingungen für die Auswahl von Tabellenelementen in einer Datentabelle,
- die Angabe des Schlüssels zum Verschlüsseln und Entschlüsseln von Nutzerdaten im Rahmen der zweiten Verschlüsselung zum Schutz gegen nicht-autorisierte Benutzung von vertraulichen Nutzerdaten ("zweiter Schlüssel"),
- die Spezifikation einer Sortierbedingung für die Wiedergabe von strukturierten Anordnungen von Tabellenelementen bei einer Übergabe an eine aufrufende Datenanwendung.

Diese Parameter können beim Aufrufen einer Programmfunktion durch eine Datenanwendung von der Datenanwendung an die Programmfunktion übergeben werden.

In dem Verfahren gemäß dem ersten Aspekt und in dem Datensystem gemäß dem zweiten Aspekt der Erfindung kann durch eine entsprechende Angabe (mittels der Verweis auf eine jeweilige Datentabelle) in einem Datenkopf eine erste Datentabelle in Relation zu einer zweiten Datentabelle gesetzt werden. Auch können auf diese Weise in einer Mehrzahl von Datentabellen eine oder mehrere Datentabellen in Relation zueinander gesetzt werden. Hierin ist mit dem Begriff "in Relation setzen" gemeint, dass für Datentabellen, die in einem Datencontainer abgelegt sind, eine logische Ordnung, wie beispielsweise eine logische Reihenfolge, eine logische Verkettung (oder Aneinanderreihung) oder eine Ineinanderschachtelung, vorgegeben ist.

### Kurze Beschreibung der Zeichnungen

Die oben genannten Aspekte und weitere Aspekte der Erfindung werden offensichtlich anhand von nachfolgend beschriebenen, beispielhaften Ausführungsformen und werden mit Bezugnahme auf diese erläutert. Die Erfindung wird nachfolgend ausführlicher und mit Verweis auf die beigefügten Zeichnungen und die darin gezeigten, beispielhaften Ausführungsformen, beschrieben. Die Erfindung ist jedoch nicht auf diese beispielhaften Ausführungsformen beschränkt, sondern durch die beigefügten Ansprüche definiert. Es gilt:
Fig. 1 zeigt in schematischer Darstellung ein Blockschaltbild von einer Ausführungsform eines Datensystems, in dem Erfindung implementiert ist.
Fig. 2 zeigt eine Ausführungsform von einer Mehrzahl von Datencontainern mit darin enthaltenen Datentabellen, gemäß der Erfindung.
Fig. 3A zeigt die Ausführungsform der Mehrzahl von Datencontainern aus der Fig. 2, wobei ein weiterer Datencontainer erzeugt und hinzugefügt worden ist, gemäß der Erfindung.
Fig. 3B zeigt die Ausführungsform der Mehrzahl von Datencontainern aus der Fig. 2, wobei ein Datencontainer entfernt bzw. beseitigt worden ist, gemäß der Erfindung.
Fig. 4A zeigt die Ausführungsform der Mehrzahl von Datencontainern aus der Fig. 2, wobei in einem der Datencontainer eine weitere Datentabelle erzeugt und hinzugefügt worden ist, gemäß der Erfindung.
Fig. 4B zeigt die Ausführungsform der Mehrzahl von Datencontainern aus der Fig. 2, wobei in einem der Datencontainer eine Datentabelle entfernt bzw. beseitigt worden ist, gemäß der Erfindung.
Fig. 5A zeigt die Ausführungsform der Mehrzahl von Datencontainern aus der Fig. 2, wobei in einer der in einem Datencontainer enthaltenen Datentabellen weitere strukturierte Anordnungen von Tabellenelementen erzeugt und hinzugefügt worden ist, gemäß der Erfindung.
Fig. 5B zeigt die Ausführungsform der Mehrzahl von Datencontainern aus der Fig. 2, wobei in einer der in einem Datencontainer enthaltenen Datentabellen eine strukturierte Anordnungen von Tabellenelementen entfernt bzw. beseitigt worden ist, gemäß der Erfindung.

### Beschreibung von beispielhaften Ausführungsformen

Die Darstellungen in der Figuren sind schematisch. Es wird angemerkt, dass in den Figuren ähnliche oder identische Elemente mit den gleichen Bezugszeichen benannten sind.

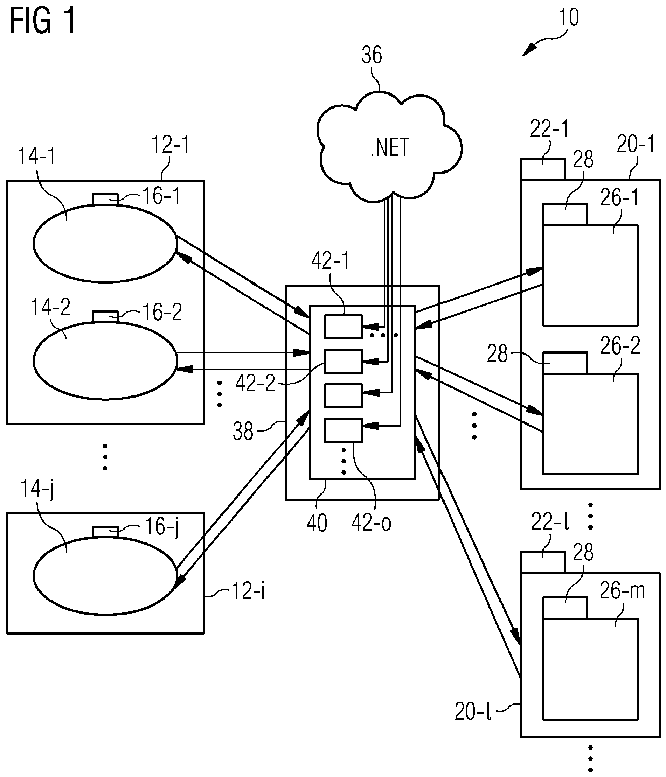

Das in Fig. 1 gezeigte, erfindungsgemäße Datensystem ist ein Datensystem 10 zum Managen von Nutzerdaten 34, die in einer oder einer Mehrzahl von Datencontainern 20 (20-1, 20-2,...,20-1) abgelegt sind, und zwar aus einer oder einer Mehrzahl von Datenanwendungen 14 (14-1, 14-2,...,14-j). Das System 10 umfasst eine oder eine Mehrzahl von Datenspeichereinrichtungen 18, in der jeweils mindestens ein strukturierter Datencontainer 20 abgelegt ist, eine oder eine Mehrzahl von Anwendungsspeichereinrichtungen 12, in der jeweils eine oder eine Mehrzahl von Datenanwendungen 14 abgelegt ist, und eine Bibliothekspeichereinrichtung 38, in der mindestens eine Programmbibliothek 40 abgelegt ist.

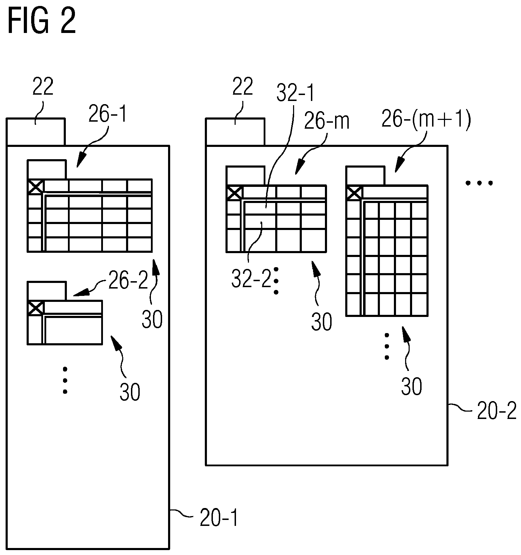

So wie das in Fig. 2 veranschaulicht ist, kann in jedem Datencontainer 20 eine oder eine Mehrzahl von Datentabellen 26 (26-1, 26-2,...,26-m) sowie mindestens einen Datenkopf 24 mit Strukturinformation bezüglich der in demselben Datencontainer 20 enthaltenen Datentabellen 26 sein. In einem Datencontainer 20 kann auch keine Datentabelle enthalten sein, d.h. der Datencontainer 20 kann leer sein. Die Anzahl der in einem Datencontainer 20 enthaltenen Datentabellen 26-1,...,26-m ist im Wesentlichen beliebig, und kann für jeden Datencontainer verschieden sein. Die Anzahl der in einem Datencontainer 20 enthaltenen Datentabellen 26-1,...,26-m ist lediglich durch die Speicherkapazität der Speichereinrichtung, die die Datencontainer 20 enthält, begrenzt.

Eine Datentabelle 26 enthält eine strukturierte Anordnung 30 von typisierten Tabellenelementen 32 (32-1, 32-2,..., 32-n). Die Anzahl der in einer Datentabelle 26 enthaltenen typisierten Tabellenelemente 32 (32-1, 32-2,..., 32-n) ist im Wesentlichen beliebig, und kann für jede Datentabelle 26 verschieden sein. Die Anzahl der in einem Datencontainer 20 enthaltenen Datentabellen 26-1,...,26-m ist lediglich durch die Speicherkapazität der Speichereinrichtung, die die Datencontainer 20 enthält, begrenzt.
Mit dem Begriff "strukturierte Anordnung" ist hierin eine Zeilenanordnung von Tabellenelementen oder eine Spaltenanordnung von Tabellenelementen gemeint. Ein jeweiliges Tabellenelement 32 enthält Nutzerdaten 34 in einer typisierten Form. Mit dem Begriff "typisierte Form" ist hierin gemeint, dass der Datentyp der in einem Tabellenelement enthaltenen Nutzerdaten eine Zeichenkette (String), ein numerisches Datum oder ein Boole'scher Wert, d.h. eine Zeichenkette mit dem Wert "wahr" oder "falsch", sein kann, und daher von einem Nutzer lesbar ist. Der mindestens eine Datenkopf 24 enthält keinen, einen oder eine Mehrzahl von Verweisen auf die im Datencontainer 20 enthaltenen Datentabellen 26 und Strukturinformation bezüglich der in Datencontainer 20 enthaltenen Datentabellen 26.

Eine jeweilige Datenanwendung 14 ist dazu ausgebildet, auf Nutzerdaten zuzugreifen, die in einem der Datencontainer 20 abgelegt sind. Ein Zugriff auf Nutzerdaten umfasst konkret ein Ausführen von einer der folgenden Funktionen: Erzeugen, Beseitigen, Löschen des Inhalts, Lesen des Inhalts, Schreiben des Inhalts, Erweitern um ein Inhaltselement 24, 26, 30, 32 oder Reduzieren um ein Inhaltselement 24, 26, 30, 32. Diese Funktionen beziehen sich auf einen Datencontainer 20, auf einem Datensatz 24, auf eine Datentabelle 26 oder auf ein Tabellenelement 32. Mit dem Begriff "Inhaltselement" ist hierin für einen Datencontainer 20 ein darin enthaltener Datensatz 24, für einen Datensatz 24 ein darin enthaltener Verweis auf eine in demselben Datencontainer 20 enthaltene Datentabelle 26, für eine Datentabelle 26 eine darin enthaltene strukturierte Anordnung von Tabellenelementen 32 oder ein in der Datentabelle enthaltenes Tabellenelement 32 gemeint.

Konkreter ausgedrückt umfassen die von den Datenanwendungen 14 ausgeführten Nutzerdaten-Zugriffsfunktionen die folgenden Funktionen:
[1a] Erzeugen oder [2a] Löschen des Inhalts von einem Datencontainer 20,
[1b] Erzeugen oder [2b] Löschen des Inhalts von einem Verweis in einem Datenkopf 24,
[1c] Erzeugen oder [2c] Löschen des Inhalts von einer Datentabelle 26,
[1d] Erzeugen oder [2d] Löschen des Inhalts von einem Tabellenelement 32,
[3a] Lesen des Inhalts von einem Datencontainer 20 oder [4a] Schreiben von Inhalt in einen Datencontainer 20,
[3b] Lesen des Inhalts von einem oder [4b] Schreiben von einem Verweis in einen Datenkopf 24,
[3c] Lesen des Inhalts von einer oder [4c] Schreiben von Inhalt in eine Datentabelle 26,
[3d] Lesen des Inhalts von einem Tabellenelement 32 oder [4d] Schreiben von Inhalt in ein Tabellenelement 32,
[5a] Hinzufügen oder [6a] Löschen von einem Datencontainer 20,
in einem Datencontainer 20, [5b] Hinzufügen oder [6b] Löschen von einem Datenkopf 24,
in einem Datencontainer 20, [5c] Hinzufügen oder [6c] Löschen von einer Datentabelle 26,
in einem Datenkopf 24, [5d] Hinzufügen oder [6d] Löschen von einem Verweis auf eine Datentabelle 26, oder
in einer Datentabelle 26, [5e] Hinzufügen oder [6e] Löschen von einer strukturierten Anordnung 30 von Tabellenelementen 32.

Die Programmbibliothek 40 enthält also eine oder eine Mehrzahl von Programmfunktionen 42 (42-1, 42-2,...,42-o). Für jede Nutzerdaten-Zugriffsfunktion ist zur Implementierung derselben eine Programmfunktion 42 in der Programmbibliothek 40 bereitgestellt.

Zur Bezeichnung und für Verweise aus verschiedenen Kontexten heraus können einer Datenanwendung 14 ein Anwendungsname 16, einem Datencontainer 20 ein Datencontainername 22, einer Datentabelle 26 ein Tabellenname 28, einer strukturierten Anordnung von Tabellenelementen 32 ein Anordnungsname (nicht bezeichnet), wie etwa ein Spaltenname oder ein Zeilenname, einem Tabellenelement 32 ein Elementname (nicht bezeichnet) und/oder einer Programmfunktion 42 ein Programmfunktionsname (nicht bezeichnet) zugeordnet werden.

Um einen Austausch von Nutzerdaten mit externen Systemen (Drittsystemen), die nicht gemäß der Erfindung ausgelegt sind, zu ermöglichen, kann für die Funktion [4a] "Lesen des Inhalts von einem Datencontainer" vorgesehen sein, dass der gelesene Nutzerdaten-Inhalt in einen externen Datenspeicher des externen Systems exportiert wird. Entsprechend kann für die Funktion [4a] "Schreiben von Inhalt in einen Datencontainer" vorgesehen sein, dass der geschriebene Inhalt vor dem Schreiben aus einem externen Datenspeicher des externen Systems importiert wird.

Die dynamische Programmbibliothek 40 enthält eine Sammlung von sogenannten Programmfunktionen 42, und zwar als Implementierung von jeder der von der einen oder der Mehrzahl der Datenanwendungen 14 ausführbaren Funktionen (Nutzerdaten-Zugriffsfunktionen). Erfindungsgemäß ist jede Programmfunktion 42 so ausgebildet, dass es in einem Fall, wo es erforderlich oder zweckdienlich ist, auf eine externe Dienstfunktion zurückzugreifen, eine entsprechende Dienstfunktion aus der dem Fachmann bekannten Software-Plattform .NET 36 verwendet.

Weiterhin erfindungsgemäß verwendet eine Datenanwendung 14 dann, wenn sie auf in einem Datencontainer 20 abgelegte Nutzerdaten zugreift, eine Programmfunktion 42 aus der Programmbibliothek 40. Mit anderen Worten, für jeden Zugriff einer Datenanwendung 14 auf Nutzerdaten, die in einem der Datencontainer 20 bereitgestellt sind, verwendet Datenanwendung 14 eine der in der Programmbibliothek 40 enthaltenen Programmfunktionen 42.

Und als noch weiteres Erfindungsmerkmal ist jeder Datencontainer 20, jeder Datenkopf 24, jede Datentabelle 26 und/oder jedes Tabellenelement 32 in einer Struktur dargestellt, die mit der erweiterbaren Auszeichnungssprache XML erzeugt werden kann bzw. erzeugt worden ist. Mit anderen Worten, jeder Datencontainer 20, jeder Datenkopf 24, jede Datentabelle 26 und/oder jedes Tabellenelement 32 ist eine XML-Datei, die nach der standardgemäßen Auszeichnungssprache XML aufgebaut und strukturiert ist.

Die vorgenannten, erfindungsgemäßen Merkmale, nämlich (i) dass die in der Programmbibliothek 40 enthaltenen Programmfunktionen 42 lediglich solche externen Dienstfunktionen verwendet, die aus der Software-Plattform .NET entnommen sind, (ii) dass die Datenanwendungen 14 auf in den Datencontainern 20 abgelegte Nutzerdaten ausschließlich unter Verwendung von Programmfunktionen 42 aus der Programmbibliothek 40 zugreifen, und (iii) dass die Datenstrukturen Datencontainer 20, Datenkopf 24, Datentabelle 26 und Tabellenelement 32 XML-Dateien sind, die nach dem Standard XML aufgebaut sind, werden die eingangs genannten Vorteile erzielt.

Um die Integrität der Datenstrukturen als XML-Datei zu gewährleisten, ist vorgesehen, dass jeder Datencontainer 20, jeder Datenkopf 24, jede Datentabelle 26 und/oder jedes Tabellenelement 32 einer ersten Verschlüsselung unterliegt. Die erste Verschlüsselung geht dahin, dass auf den Datencontainer 20, die Datentabelle 26, den Datenkopf 24 und/oder das Tabellenelement 32 nur über eine vorgegebene Schnittstelle in Form einer Programmfunktion 42 aus der Programmbibliothek 40 zugegriffen werden kann. Dabei und im Übrigen wird sichergestellt, dass eine jeweilige Datenstruktur (d.h. ein Datencontainer 20, ein Datenkopf 24, eine Datentabelle 26 oder ein Tabellenelement 32) nur mit einem solchen Bearbeitungswerkzeug bearbeitet werden kann, das gewährleistet, dass ihre in XML dargestellte Struktur als solche erhalten bleibt. Mit anderen Worten, es wird vermieden, dass die Datenstrukturen 20, 24, 26, 32 mittels solchen bekannten Editoren bearbeitet werden, bei denen der Bearbeiter für den Erhalt der Integrität der Struktur als XML-Datei verantwortlich, d.h. bei denen es möglich ist, dass im Verlauf der Bearbeitung die gemäß XML vorgesehene Struktur des Inhalts versehentlich gestört bzw. verletzt werden kann. Vielmehr werden ausschließlich solche Bearbeitungswerkzeuge zugelassen, die automatisch die Integrität der Struktur der XML überprüfen und/oder im Fall einer Verletzung die Integrität wieder herstellen.

Für solche Fälle, in denen eine Datenstruktur, d.h. ein Datencontainer 20, ein Datenkopf 24, eine Datentabelle 26 oder ein Tabellenelement 32, vertrauliche Nutzerdaten enthält, ist vorgesehen, dass die Datenstruktur einer doppelten Verschlüsselung unterliegt. Zusätzlich zu der oben beschriebenen, ersten Verschlüsselung tritt eine zweite Verschlüsselung zum Schutz gegen eine nicht-autorisierte Benutzung von Nutzerdaten 34, gemäß der die Nutzerdaten mit einem Schlüssel verschlüsselt werden. Ein Fachmann kennt geeignete Verschlüsselungsverfahren. Ein jeweiliger Schlüssel zum Entschlüsseln der zweiten Verschlüsselung kann in einer Programmfunktion 42 aus der Programmbibliothek 40 oder in der Datenanwendung 14, mit der auf die vertraulichen Nutzerdaten zugegriffen wird, abgelegt sein.

Das in der Fig. 1 gezeigte Datensystem 10 kann als verteiltes System implementiert sein. Damit ist gemeint, dass die Datenspeichereinrichtungen 18, die Anwendungsspeichereinrichtungen 12 und die Bibliothekspeichereinrichtung 38 in verschiedenen, ggf. dezentral angeordneten Rechensystemen (Computern) angeordnet sind, die untereinander über Datenübertragungsleitungen miteinander verbunden sind. Die Datenanwendungen 14 können also in verschiedenen Anwendungsspeichereinrichtungen 12 ausführbar abgelegt sein, und die Anwendungsspeichereinrichtungen 12 wiederum können in verschiedenen Rechensystemen angeordnet sein. Entsprechend kann die Programmbibliothek 40 in einer gesonderten Bibliothekspeichereinrichtung 38 abgelegt sein, in der nicht irgendeine der Datenanwendungen 14 abgelegt ist und die in einem gesonderten Rechensystem angeordnet sein kann.

Eine Programmfunktion 42 aus der Programmbibliothek 40 ist nicht notwendigerweise nur einer Datenanwendung zugeordnet, sondern es auch mehreren bestimmten Datenanwendungen 14 zugeordnet sein. Dabei kann auch eine Kopie des Methodenmoduls 42 in einer Anwendungsspeichereinrichtung 12 ausführbar abgelegt sein, in der auch die zugeordnete Datenanwendung 14 abgelegt ist.

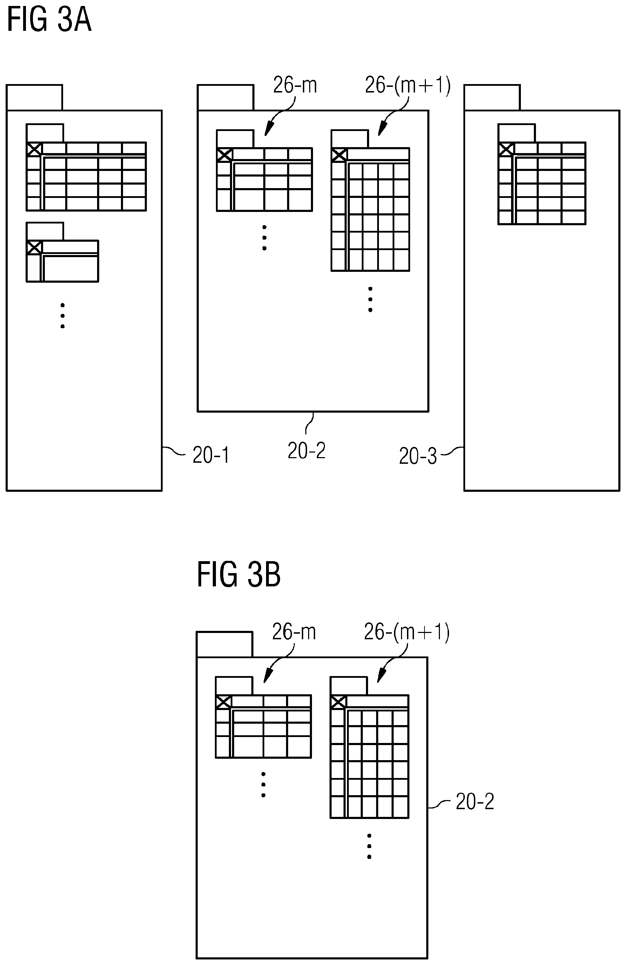

In den Figuren 3A bis 5B sind, wenn diese jeweils mit der Fig. 2 verglichen werden, einige der oben genannten Nutzerdaten-Zugriffsfunktionen veranschaulicht.

Fig. 3A veranschaulicht die Funktion [5a] "Hinzufügen eines Datencontainers". Im Vergleich zu Fig. 2 wurde der Datencontainer 20-3 hinzugefügt, der zu den zuvor (wie in Fig. 2 gezeigt) vorhandenen Datencontainern 20-1 und 20-2 hinzugetreten ist.

Fig. 3B veranschaulicht die Funktion [6a] "Löschen eines Datencontainers". Im Vergleich zu Fig. 2 wurde der Datencontainer 20-2, der zuvor (wie in Fig. 2 gezeigt) vorhandenen war, als Ganzes gelöscht.

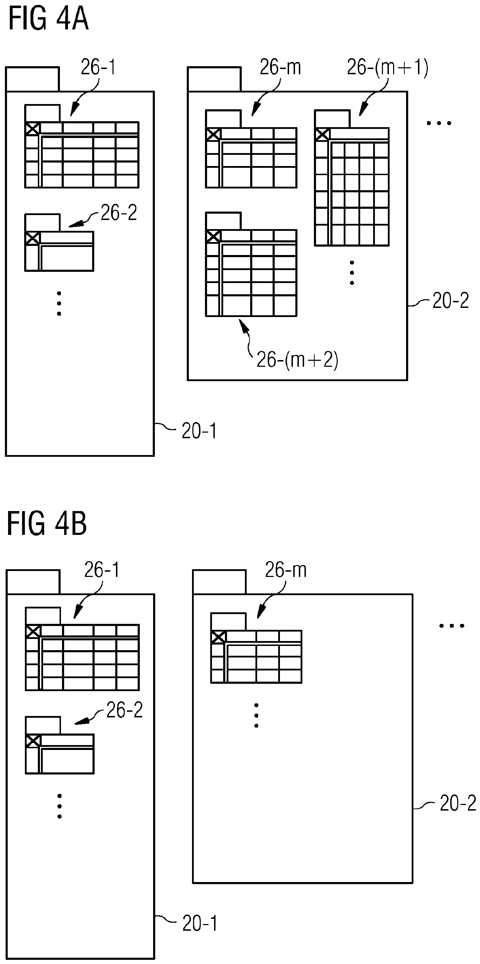

Fig. 4A veranschaulicht die Funktion [5c] "in einem Datencontainer, Hinzufügen einer Datentabelle". Im Vergleich zu Fig. 2 wurde im bestehenden Datencontainer 20-2 eine Datentabelle 26-(m+2) erzeugt, die zu den zuvor (wie in Fig. 2 gezeigt) in dem Datencontainer 20-2 enthaltenen Datentabellen 20-m und 26-(m+1) hinzugetreten ist.

Fig. 4B veranschaulicht die Funktion [6c] "in einem Datencontainer, Löschen einer Datentabelle". Im Vergleich zu Fig. 2 wurde im bestehenden Datencontainer 20-2 die Datentabelle 26-(m+1) als Ganzes gelöscht.

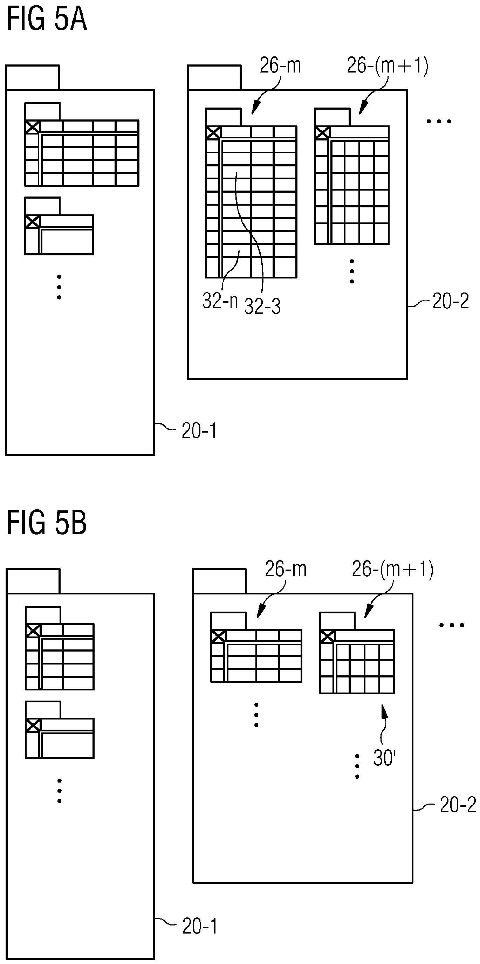

Fig. 5A veranschaulicht die Funktion [5e] "in einer Datentabelle, Hinzufügen von einer strukturierten Anordnung von Tabellenelementen". Im Vergleich zu Fig. 2 wurde im bestehenden Datencontainer 20-2 in der Datentabelle 26-m eine Mehrzahl von strukturierten Anordnungen 30, hier Tabellenzeilen, 32-3 ... 32-n erzeugt, die zu den zuvor (wie in Fig. 2 gezeigt) in der Datentabelle 26-m enthaltenen strukturierten Anordnungen (Tabellenzeilen) 32-1 und 32-2 hinzugetreten sind.

Fig. 5B veranschaulicht die Funktion [6e] "in einer Datentabelle, Löschen von einer strukturierten Anordnung von Tabellenelementen". Im Vergleich zu Fig. 2 wurde im bestehenden Datencontainer 20-2 in der Datentabelle 26-(m+1) eine Mehrzahl von strukturierten Anordnungen 30, hier Tabellenzeilen, gelöscht, die (wie in Fig. 2 gezeigt) in der Datentabelle 26-(m+1) enthalten waren, so dass in der Datentabelle 26-(m+1) im Vergleich zur Situation in der Fig. 2 eine geringere Anzahl von strukturierten Anordnungen 30' (im Beispiel lediglich drei Tabellenzeilen) verbleibt.

In der nachfolgenden Auflistung werden beispielhaft für einige der Funktionen (Nutzerdaten-Zugriffsfunktionen) Ausführungsformen der entsprechenden Codes von konkreten, in der in der Software-Plattform .NET verwendeten Sprache abgefassten Definitionen von Methodenmodulen vorgeschlagen.

In dem jeweils angegebenen Code ist nach einer jeweiligen Zeichenkette "///" in Klartext eine für den Fachmann verständliche Beschreibung der Funktion bzw. Wirkungsweise des Methodenmoduls. Mit Verweis auf die verwendeten Konzepte aus der Software-Plattform .NET werden in den Klartextbeschreibungen die Bezeichner "DataContainer" für Datencontainer, "DataSet" für Datensätze, "DataTable" für Datentabellen, "DataView" für eine Spezifikation einer Darstellung in einer Wiedergabe einer Datentabelle verwendet.

Der jeweils gewählte Name (Methodenmodulname) eines Methodenmoduls ist in fettgedruckter Schriftart angegeben. Unmittelbar an den Methodenmodulnamen anschließend folgt, zwischen runden Klammern "(" und ")" gesetzt, eine Auflistung der in dem Methodenmodul verwendeten und bei einem Aufruf zu übergebenden Parameter. In einer Vorschau auf die nachfolgend dargestellten Ausführungsformen von Methodenmodulen wird angemerkt, dass erfindungsgemäß typische Parameter für die Methodenmodule die folgenden umfassen:
- der Namen 22 eines Datencontainers 20,
- eine Pfadangabe (Verzeichnisangabe) für den logischen Ablageort von einem Datencontainer 20 in einer Verzeichnisstruktur (oder dem Verzeichnisbaum) in einer Datenspeichereinrichtung 18,
- der Namen 28 einer bestimmten Datentabelle 26 in einem Datencontainer,
- Filterbedingungen für die Auswahl von Tabellenelementen 32 in einer Datentabelle 26,
- die Angabe des Schlüssels zum Verschlüsseln und Entschlüsseln von Nutzerdaten im Rahmen der zweiten Verschlüsselung zum Schutz gegen nicht-autorisierte Benutzung von vertraulichen Nutzerdaten ("zweiter Schlüssel"),
- die Spezifikation einer Sortierbedingung für die Wiedergabe von strukturierten Anordnungen 30 von Tabellenelementen 32 bei einer Übergabe an eine aufrufende Datenanwendung 14.

### Funktion [3b] "Lesen des Inhalts von einem Datencontainer", bei einfach verschlüsselt abgelegten Nutzerdaten

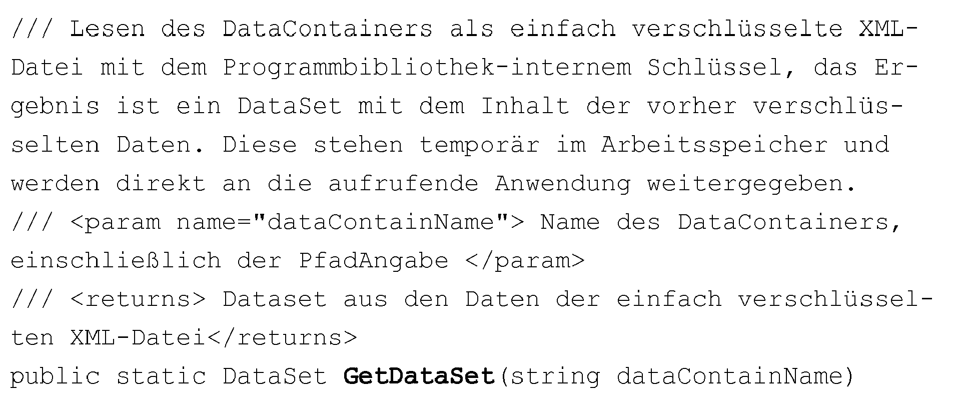

### Funktion [3b] "Lesen des Inhalts von einem Datencontainer", bei doppelt verschlüsselt abgelegten Nutzerdaten

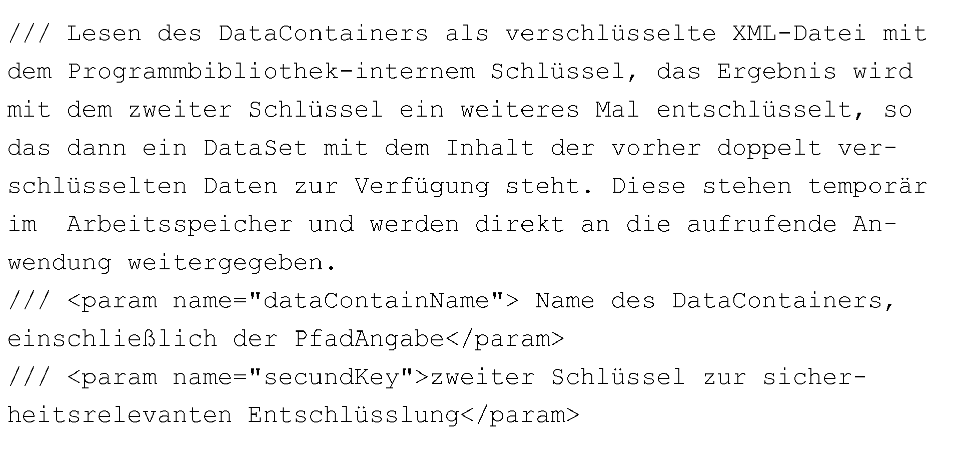

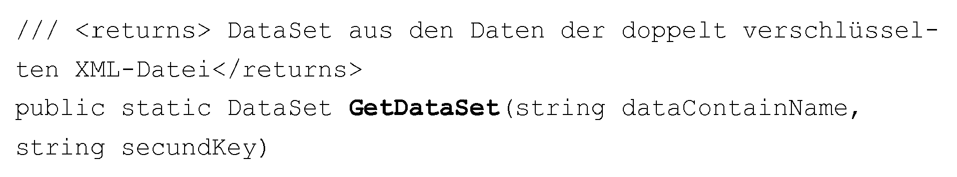

### Funktion [3c] "Lesen des Inhalts von einer Datentabelle in einem Datencontainer", bei einfach verschlüsselt abgelegten Nutzerdaten

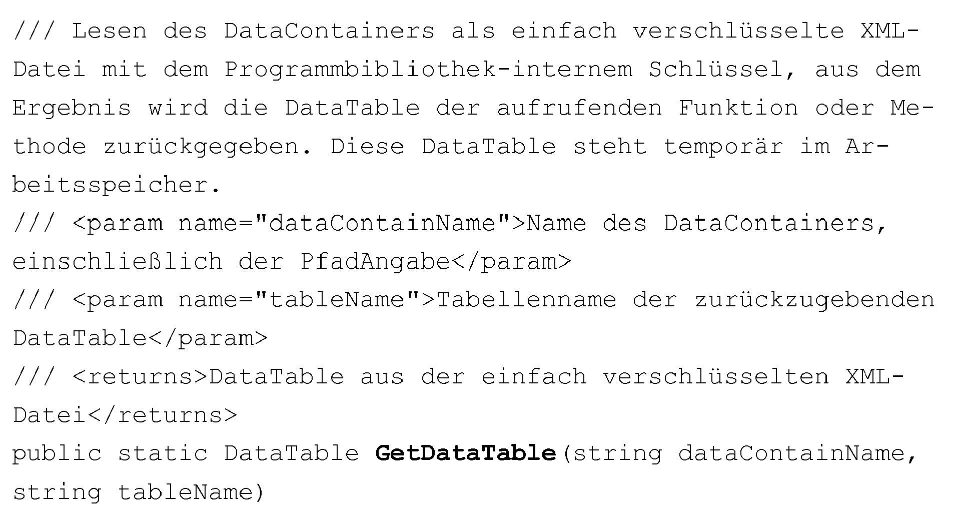

### Funktion [3c] "Lesen des Inhalts von einer Datentabelle in einem Datencontainer", bei doppelt verschlüsselt abgelegten Nutzerdaten

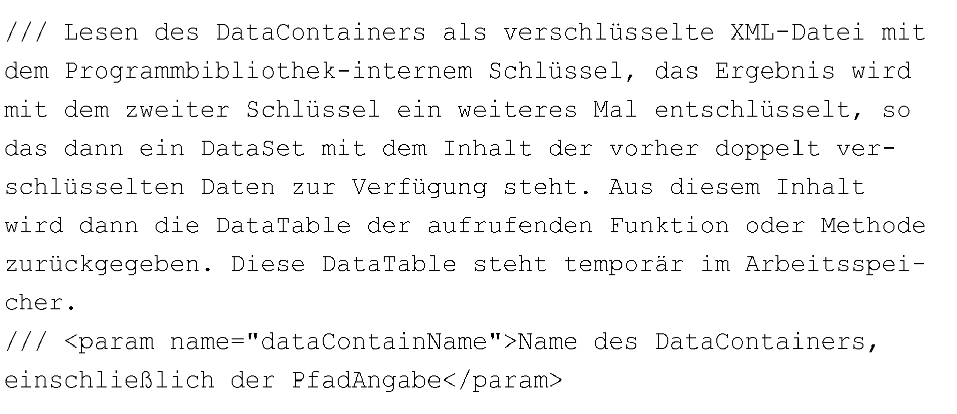

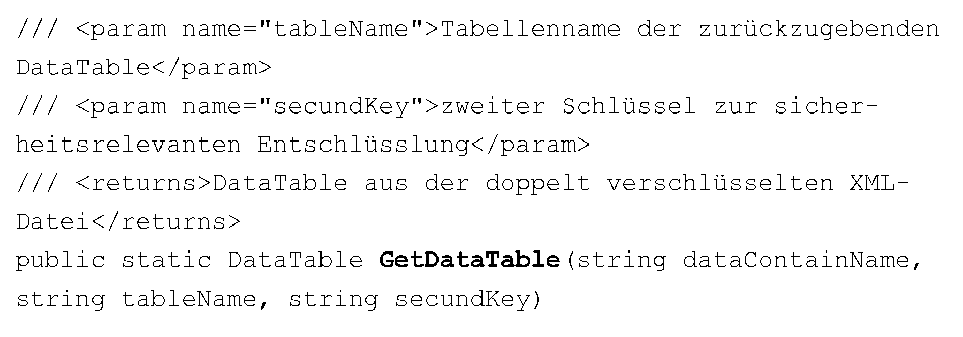

### Funktion [3c] "Lesen des Inhalts von einer Datentabelle in einem Datencontainer", bei einfach verschlüsselt abgelegten Nutzerdaten und mit Übergabe an eine aufrufende Funktion in sortierter Form gemäß vorgegebener Sortierbedingungen

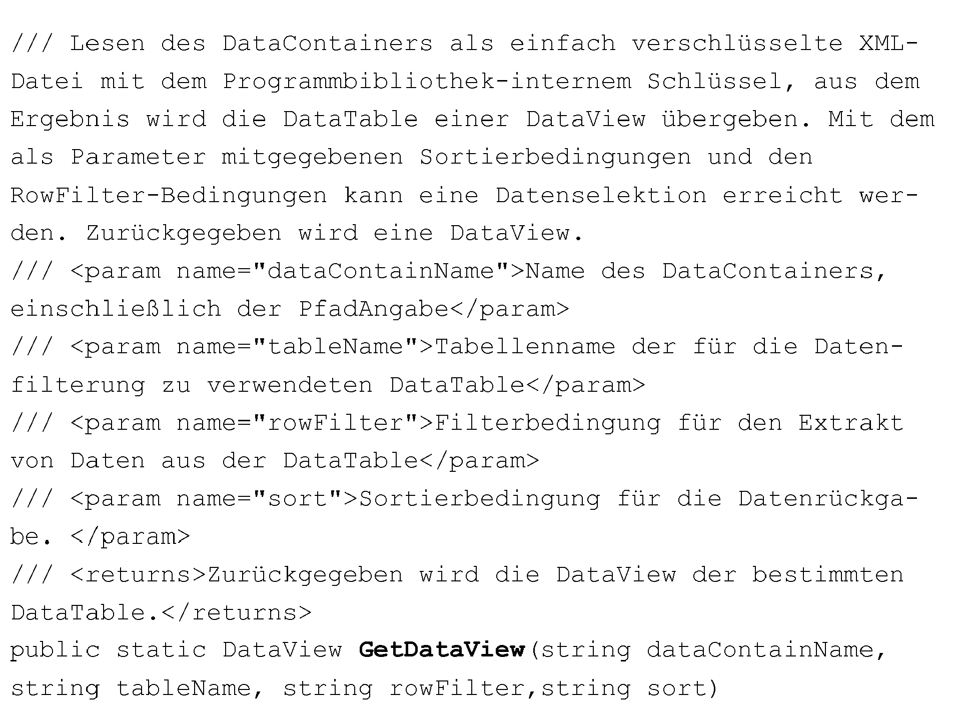

### Funktion [3c] "Lesen des Inhalts von einer Datentabelle in einem Datencontainer", bei doppelt verschlüsselt abgelegten Nutzerdaten und mit Übergabe an eine aufrufende Funktion in sortierter Form gemäß vorgegebener Sortierbedingungen

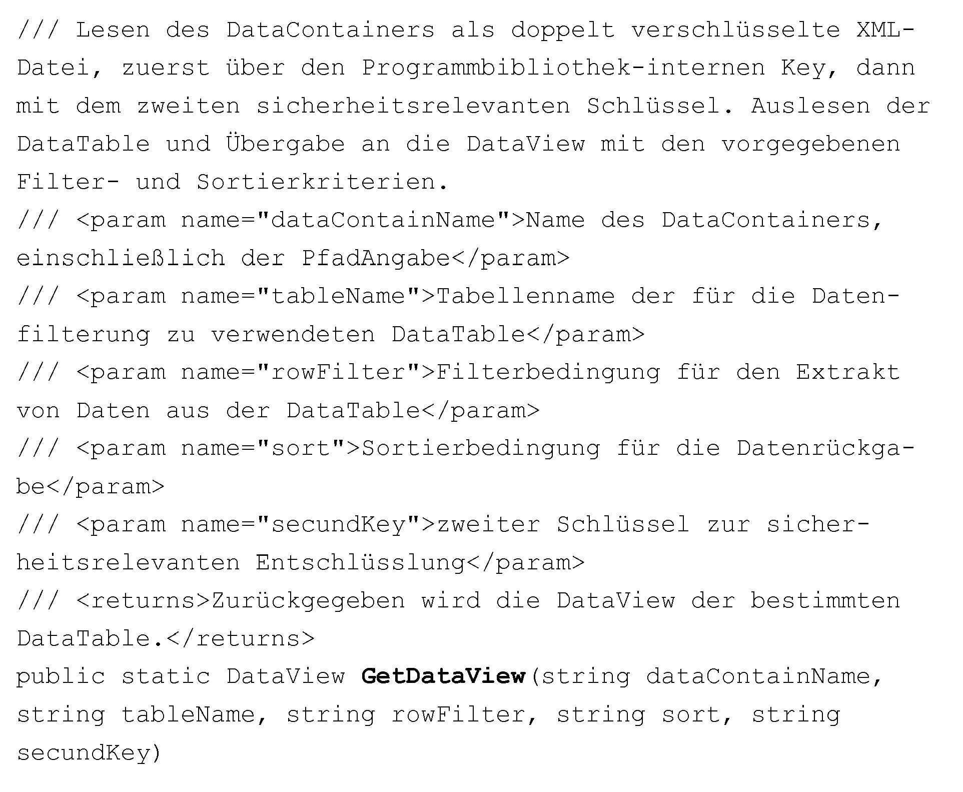

### Funktion [3a] "Lesen des Inhalts von einem Datencontainer", bei einfach verschlüsselt abgelegten Nutzerdaten

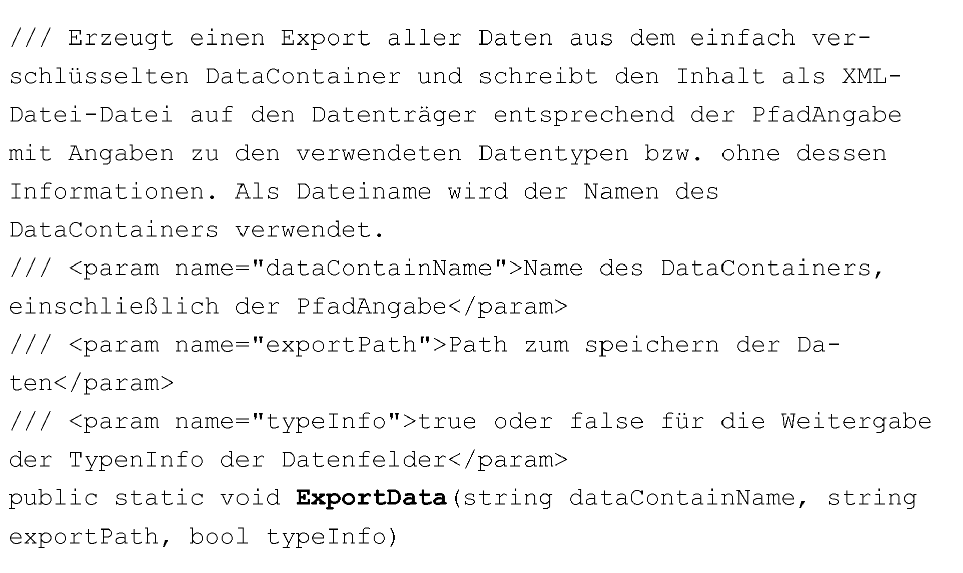

### Funktion [3a] "Lesen des Inhalts von einem Datencontainer", bei doppelt verschlüsselt abgelegten Nutzerdaten

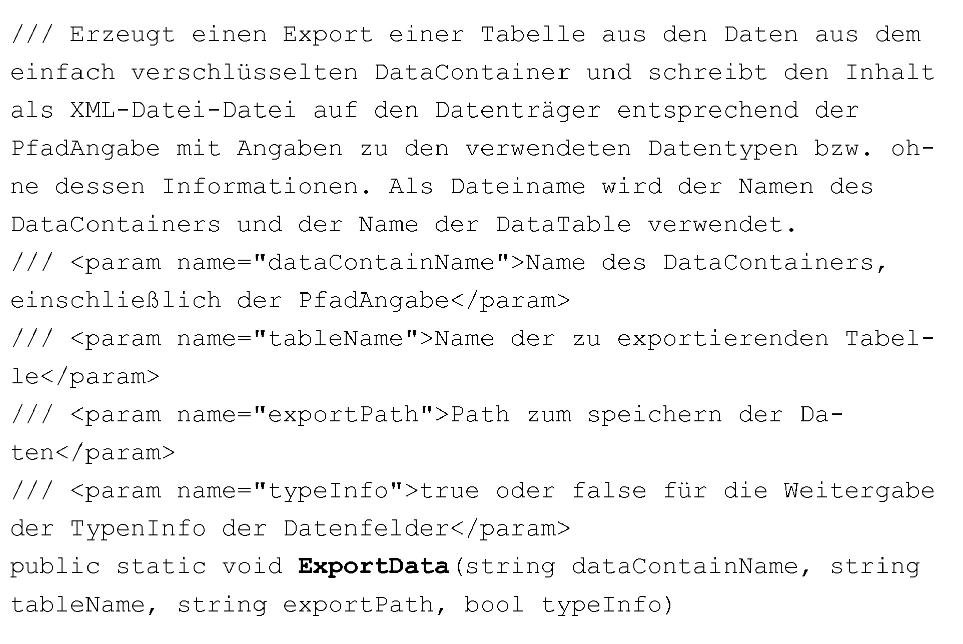

### Funktion [5a] "Hinzufügen von einem Datencontainer", mit Angabe von Pfad und Datencontainername

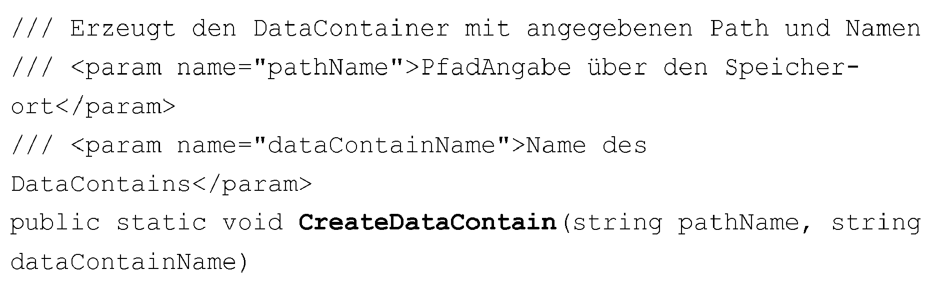

### Funktion [5a] "Hinzufügen von einem Datencontainer", mit Angabe von Pfad und Datencontainername und für doppelt verschlüsselt abzulegende Nutzerdaten

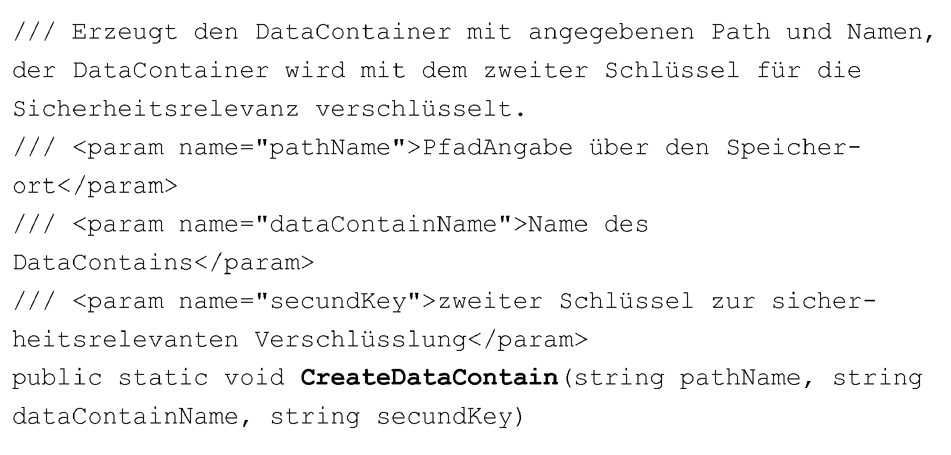

### Funktion [6a] "Löschen von einem Datencontainer", mit Angabe von Pfad und Datencontainername

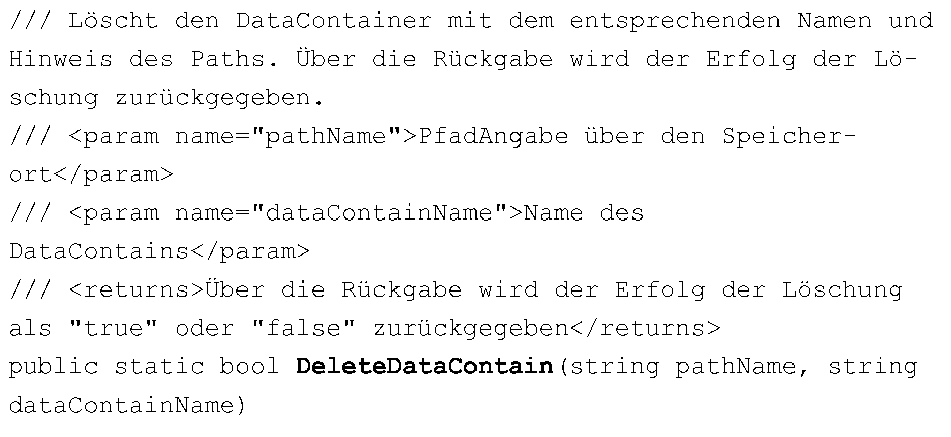

### Funktion [6c] "in einem Datencontainer, Löschen von einer Datentabelle", mit Angabe von Pfad, Datencontainername und Tabellenname

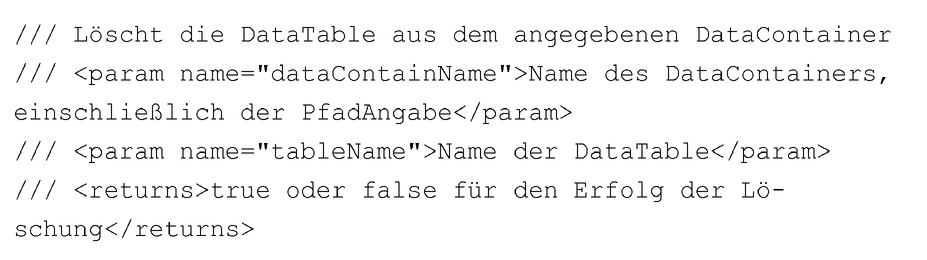

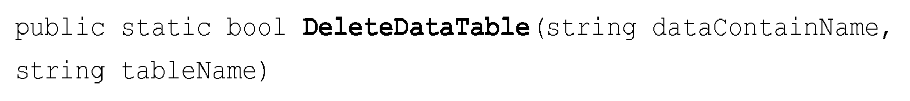

### Funktion [6c] "in einem Datencontainer, Löschen von einer Datentabelle", mit Angabe von Pfad, Datencontainername und Tabellenname und für Datencontainer mit doppelt verschlüsselt abgelegten Nutzerdaten

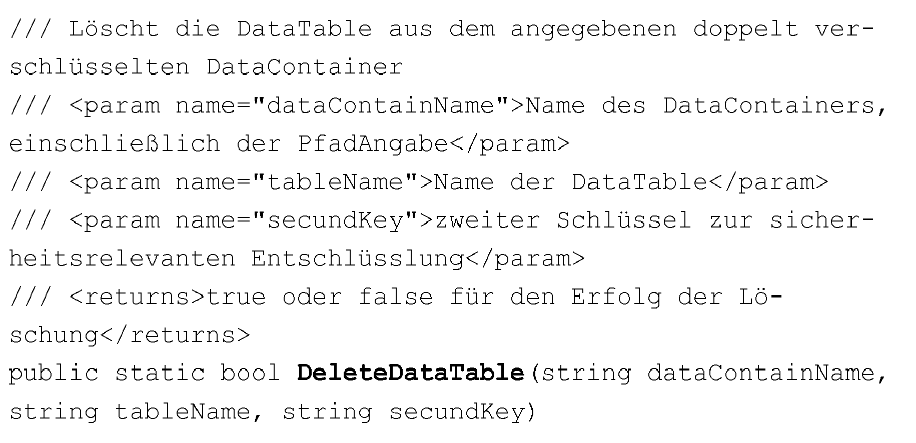

### Funktion [5c] "in einem Datencontainer, Hinzufügen von einer Datentabelle", mit Angabe von Pfad, Datencontainername, Tabellenname und Bezeichnung der Tabellenspalten

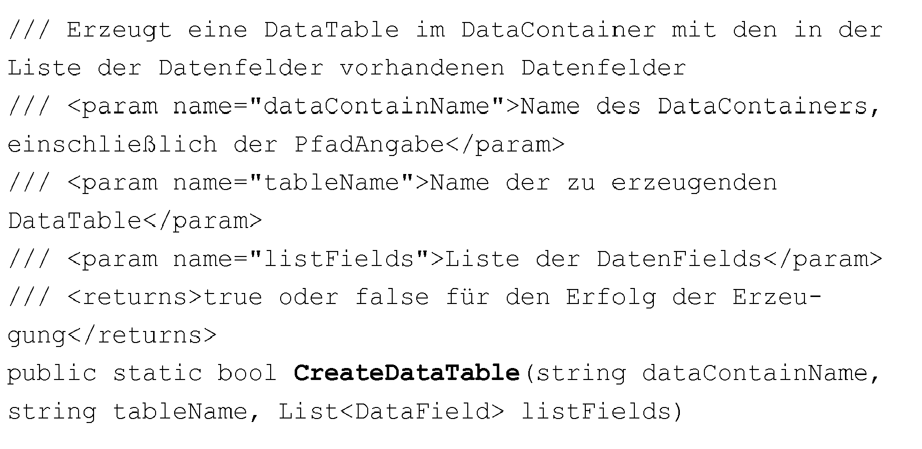

### Funktion [5c] "in einem Datencontainer, Hinzufügen von einer Datentabelle", mit Angabe von Pfad, Datencontainername, Tabellenname und Bezeichnung der Tabellenspalten für Datencontainer mit doppelt verschlüsselt abgelegten Nutzerdaten

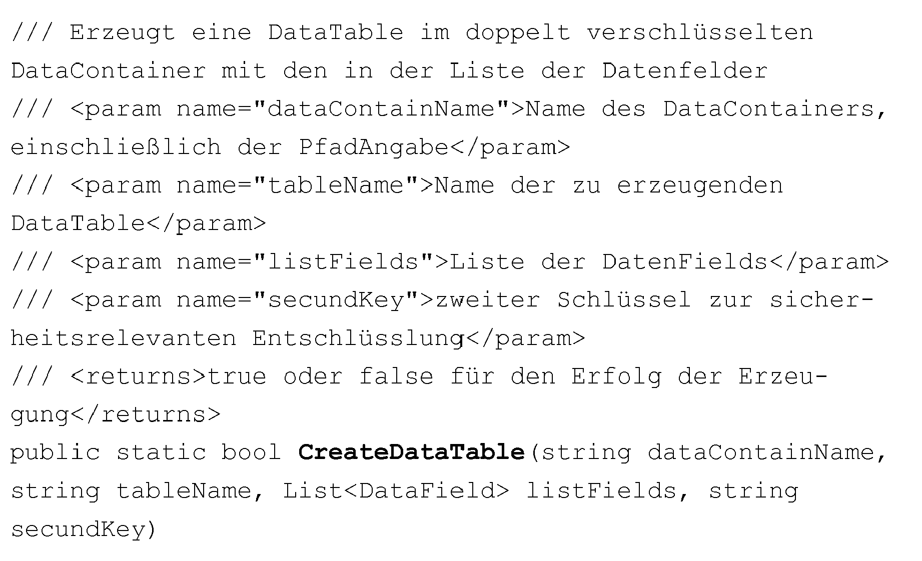

### Funktion [4b] "Schreiben von Inhalt in einen Datenkopf", mit Angabe von Pfad, Datencontainername und Datensatzname, für Datencontainer mit einfach verschlüsselt abgelegten Nutzerdaten

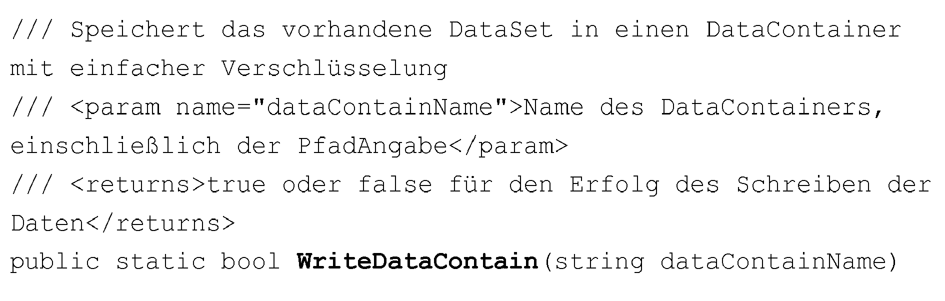

### Funktion [4b] "Schreiben von Inhalt in einen Datenkopf", mit Angabe von Pfad, Datencontainername und Datensatzname, für Datencontainer mit doppelt verschlüsselt abgelegten Nutzerdaten

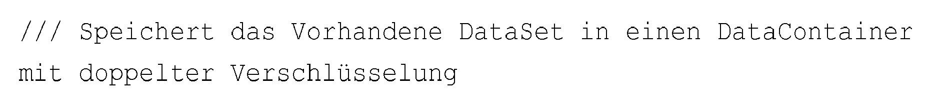

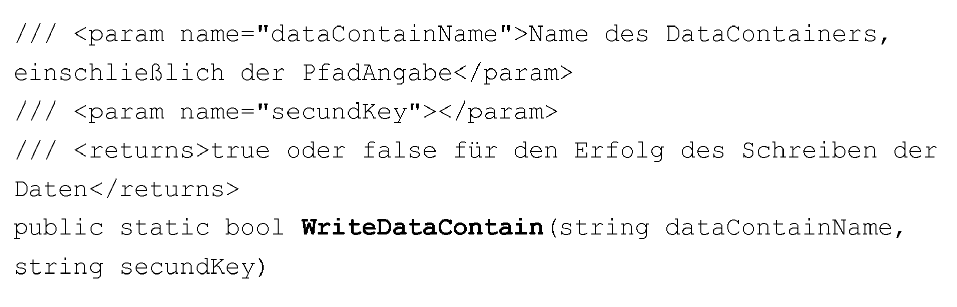

## Patentansprüche

1. Ein Verfahren zum Managen von Nutzerdaten (34), die in einer oder einer Mehrzahl von Datencontainern (20) abgelegt sind, aus einer oder einer Mehrzahl von Datenanwendungen (14), das Verfahren aufweisend:
[A] Bereitstellen von Nutzerdaten (34) in der Form von einem oder mehreren strukturierten Datencontainern (20), wobei jeder Datencontainer (20) dazu ausgebildet ist, keine, eine oder eine Mehrzahl von Datentabellen (26) sowie mindestens einen Datenkopf (24) mit Strukturinformation bezüglich der Datentabellen zu enthalten, wobei eine Datentabelle (26) eine strukturierte Anordnung (30) von typisierten Tabellenelementen (32) enthält und jedes Tabellenelement (32) Nutzerdaten (34) in typisierter Form enthält, wobei der mindestens eine Datenkopf (24) dazu ausgebildet ist, keinen, einen oder eine Mehrzahl von Verweisen auf die, und Strukturinformation von den, im Datencontainer (20) enthaltenen Datentabellen (26) zu enthalten,
[B] Bereitstellen von einer oder einer Mehrzahl von Datenanwendungen (14), von denen jede dazu ausgebildet ist, mindestens eine der folgenden Funktionen auszuführen: Erzeugen, Löschen des Inhalts, Lesen des Inhalts, Schreiben des Inhalts, Erweitern um ein Inhaltselement (24, 26, 30, 32) oder Reduzieren um ein Inhaltselement (24, 26, 30, 32), und zwar ein Inhaltselement von einem Datencontainer (20), einem Datensatz (24), einer Datentabelle (26) oder eines Tabellenelements (32),
[C] Bereitstellen von einer Programmbibliothek (40), die ein oder eine Mehrzahl von Programmfunktion (42) enthält, und zwar mindestens eine Programmfunktion (42) als Implementierung für jede der im Schritt [B] genannten Funktionen,
wobei jede Programmfunktion (42), insoweit sie auf eine externe Dienstfunktion zurückgreift, eine Dienstfunktion aus der Software-Plattform .NET verwendet,
wobei eine Datenanwendung (14) zum Ausführen von einer im Schritt [B] genannten Funktion eine Programmfunktion (42) aus der Programmbibliothek (40) verwendet, und
wobei jeder Datencontainer (20), jede Datentabelle (26), jeder Datenkopf (24) und/oder jedes Tabellenelement (32) in einer Struktur dargestellt ist, die mit der erweiterbaren Auszeichnungssprache XML erzeugbar ist.

2. Verfahren gemäß Anspruch 1, wobei im Schritt [B] mindestens eine Datenanwendung (14) dazu ausgebildet ist, mindestens eine der folgenden Funktionen auszuführen:
[1a] Erzeugen oder [2a] Löschen des Inhalts von einem Datencontainer (20),
[1b] Erzeugen oder [2b] Löschen des Inhalts von einem Verweis in einem Datenkopf (24),
[1c] Erzeugen oder [2c] Löschen des Inhalts von einer Datentabelle (26),
[1d] Erzeugen oder [2d] Löschen des Inhalts von einem Tabellenelement (32),
[3a] Lesen des Inhalts von einem Datencontainer (20) oder [4a] Schreiben von Inhalt in einen Datencontainer (20),
[3b] Lesen des Inhalts von einem oder [4b] Schreiben von einem Verweis in einen Datenkopf (24),
[3c] Lesen des Inhalts von einer oder [4c] Schreiben von Inhalt in eine Datentabelle (26),
[3d] Lesen des Inhalts von einem Tabellenelement (32) oder [4d] Schreiben von Inhalt in ein Tabellenelement (32),
[5a] Hinzufügen oder [6a] Löschen von einem Datencontainer (20),
in einem Datencontainer (20), [5b] Hinzufügen oder [6b] Löschen von einem Datenkopf (24),
in einem Datencontainer (20), [5c] Hinzufügen oder [6c] Löschen von einer Datentabelle (26),
in einem Datensatz (24), [5d] Hinzufügen oder [6d] Löschen von einem Verweis auf eine Datentabelle (26), oder
in einer Datentabelle (26), [5e] Hinzufügen oder [6e] Löschen von einer strukturierten Anordnung (30) von Tabellenelementen (32).

3. Verfahren gemäß Anspruch 1 oder 2, wobei jeder einzelne Datencontainer (20), jede einzelne Datentabelle (26), jeder einzelne Datenkopf (24) und/oder jedes einzelne Tabellenelement (32) zumindest einer ersten Verschlüsselung unterliegt, die dahingeht, dass auf den Datencontainer (20), die Datentabelle (26), den Datenkopf (24) und/oder das Tabellenelement (32) nur über eine Programmfunktion (42) aus der Programmbibliothek (40) zugegriffen werden kann.

4. Verfahren gemäß Anspruch 3, wobei mindestens ein Datencontainer (20), eine Datentabelle (26), ein Datenkopf (24) und/oder ein Tabellenelement (32) einer doppelten Verschlüsselung unterliegt, wobei die zweite Verschlüsselung dahingeht, einen Schutz gegen nicht-autorisierte Benutzung von Nutzerdaten (34) zu gewährleisten, und wobei der Schlüssel zum Entschlüsseln der zweiten Verschlüsselung in einer Programmfunktion (42) der Programmbibliothek (40) oder in einer Datenanwendung (14) abgelegt ist.

5. Verfahren gemäß einem der Ansprüche 1 bis 4, wobei zum inhaltlichen Editieren ein Datencontainer (20), eine Datentabelle (26), ein Datenkopf (24) und/oder ein Tabellenelement (32) nur mit einem Bearbeitungswerkzeug bearbeitet werden kann, welches gewährleistet, dass die jeweilige in der Auszeichnungssprache XML dargestellte Struktur erhalten bleibt.

6. Verfahren gemäß einem der Ansprüche 1 bis 5, wobei mindestens zwei Datenanwendungen (14) in zwei verschiedenen Anwendungsspeichereinrichtungen (12) ausführbar abgelegt sind.

7. Verfahren gemäß einem der Ansprüche 1 bis 6, wobei die Programmbibliothek (40) in einer gesonderten Bibliothekspeichereinrichtung (38) abgelegt ist, in der nicht irgendeine der Datenanwendungen (14) abgelegt ist.

8. Verfahren gemäß einem der Ansprüche 1 bis 7, wobei von mindestens einer Programmfunktion (42) der Programmbibliothek (40), das einer oder mehreren bestimmten Datenanwendungen (14) zugeordnet ist, eine Kopie in einer Anwendungsspeichereinrichtung (12)ausführbar ist, in der die bestimmte Datenanwendung (14) abgelegt ist.

9. Verfahren gemäß einem der Ansprüche 2 bis 8, wobei für die Funktion [3a] vorgesehen ist, dass der gelesene Inhalt in einen externen Datenspeicher exportiert wird, und für die Funktion [4a] vorgesehen ist, dass der geschriebene Inhalt vor dem Schreiben aus einem externen Datenspeicher importiert wird.

10. Ein Verfahren zum Umwandeln von einer beliebigen Datenbank in einen strukturierten Datencontainer (20), der zum Ausführen des Verfahrens gemäß einem der Ansprüche 1 bis 9 ausgebildet ist, wobei jeder Datencontainer (20) dazu ausgebildet ist, keine, eine oder eine Mehrzahl von Datentabellen (26) sowie mindestens einen Datenkopf (24) mit Strukturinformation bezüglich der Datentabellen zu enthalten, wobei eine Datentabelle (28) eine strukturierte Anordnung (30) von typisierten Tabellenelementen (32) enthält und jedes Tabellenelement (32) Nutzerdaten in typisierter Form enthält, wobei der mindestens eine Datenkopf (24) dazu ausgebildet ist, keinen, einen oder eine Mehrzahl von Verweisen auf die, und Strukturinformation von den, im Datencontainer (20) enthaltenen Datentabellen (26) zu enthalten,
wobei jeder Datencontainer (20), jede Datentabelle (26), jeder Datenkopf (24) und/oder jedes Tabellenelement (32) in einer Struktur dargestellt ist, die mit der erweiterbaren Auszeichnungssprache XML erzeugbar ist, und
wobei jeder einzelne Datencontainer (20), jede einzelne Datentabelle (26), jeder einzelne Datenkopf (24) und/oder jedes einzelne Tabellenelement (32) zumindest einer ersten Verschlüsselung unterliegt, die dahingeht, dass er/sie/er/es nur mit einem Bearbeitungswerkzeug bearbeitet werden kann, welches gewährleistet, dass seine/ihre/seine/seine in der Auszeichnungssprache XML dargestellte Struktur erhalten bleibt.

11. Ein Verfahren zum Umwandeln von einer beliebigen Anwendung, die dazu ausgebildet ist, Nutzerdaten, die in beliebigen Datenbanken gespeichert sind, zu managen, in eine Datenanwendung (14), die zum Ausführen des Verfahrens gemäß einem der Ansprüche 1 bis 9 ausgebildet ist und die ferner dazu ausgebildet ist, Nutzerdaten (34), die in einem aus der beliebigen Datenbank durch Anwenden des Verfahrens gemäß Anspruch 9 hervorgegangenen Datencontainer (20) gespeichert sind, zu managen,
wobei jede Datenanwendung (14) anstelle von einer Funktion zum Zugreifen auf die beliebige Datenbank eine Programmfunktion (42) aufruft, die in einer Programmbibliothek (40) bereitgestellt ist,
wobei die Programmbibliothek (40) eine Mehrzahl von Programmfunktionen (42) enthält, und zwar mindestens eine Programmfunktion (42) als Implementierung für jede der von den Datenanwendungen (14) aufrufbaren Funktionen, und
wobei jede Programmfunktion (42), insoweit sie auf eine externe Dienstfunktion zurückgreift, eine Dienstfunktion aus der Software-Plattform .NET verwendet.

12. Ein Datensystem (10) zum Managen von Nutzerdaten (34), die in einer oder einer Mehrzahl von Datencontainern (20) abgelegt sind, aus einer oder einer Mehrzahl von Datenanwendungen (14), das System (10) aufweisend:
eine oder eine Mehrzahl von Datenspeichereinrichtungen (18), in der mindestens ein strukturierter Datencontainer (20) abgelegt ist, wobei jeder Datencontainer (20) dazu ausgebildet ist, keine, eine oder eine Mehrzahl von Datentabellen (26) sowie mindestens einen Datenkopf (24) mit Strukturinformation bezüglich der Datentabellen zu enthalten, wobei eine Datentabelle (26) eine strukturierte Anordnung (30) von typisierten Tabellenelementen (32) enthält und jedes Tabellenelement (32) Nutzerdaten (34) in typisierter Form enthält, wobei der mindestens eine Datenkopf (24) dazu ausgebildet ist, keinen, einen oder eine Mehrzahl von Verweisen auf die, und Strukturinformation von den, im Datencontainer (20) enthaltenen Datentabellen (26) zu enthalten,
eine oder eine Mehrzahl von Anwendungsspeichereinrichtungen (12), in der eine oder eine Mehrzahl von Datenanwendungen (14) abgelegt ist, von denen jede dazu ausgebildet ist, mindestens eine der folgenden Funktionen auszuführen: Erzeugen, Löschen des Inhalts, Lesen des Inhalts, Schreiben des Inhalts, Erweitern um ein Inhaltselement (24, 26, 30, 32) oder Reduzieren um ein Inhaltselement (24, 26, 30, 32), und zwar ein Inhaltselement von einem Datencontainer (20), einer Datentabelle (26), einem Datenkopf (24) oder eines Tabellenelements (32),
eine Bibliothekspeichereinrichtung (38), in der mindestens eine Programmbibliothek (40) abgelegt ist, die eines oder eine Mehrzahl von Programmfunktionen (42) als Implementierung von jeder der von der einen oder der Mehrzahl der Datenanwendungen (14) ausführbaren Funktionen aufweist,
wobei jede Programmfunktion (42) so ausgebildet ist, dass es, insoweit sie auf eine externe Dienstfunktion zurückgreift, eine Dienstfunktion aus der Software-Plattform .NET verwendet,
wobei eine Datenanwendung (14) zum Ausführen von einer im Schritt [B] genannten Funktion eine Programmfunktion (42) aus der Programmbibliothek (40) verwendet, und
wobei jeder Datencontainer (20), jede Datentabelle (26), jeder Datenkopf (24) und/oder jedes Tabellenelement (32) in einer Struktur dargestellt ist, die mit der erweiterbaren Auszeichnungssprache XML erzeugbar ist.

13. Datensystem gemäß Anspruch 12, wobei mindestens eine Datenanwendung (14) dazu ausgebildet ist, mindestens eine der folgenden Funktionen auszuführen:
[1a] Erzeugen oder [2a] Löschen des Inhalts von einem Datencontainer (20),
[1b] Erzeugen oder [2b] Löschen des Inhalts von einem Verweis in einem Datensatz (24),
[1c] Erzeugen oder [2c] Löschen des Inhalts von einer Datentabelle (26),
[1d] Erzeugen oder [2d] Löschen des Inhalts von einem Tabellenelement (32),
[3a] Lesen des Inhalts von einem Datencontainer (20) oder [4a] Schreiben von Inhalt in einen Datencontainer (20),
[3b] Lesen des Inhalts von einem oder [4b] Schreiben von einem Verweis in einen Datensatz (24),
[3c] Lesen des Inhalts von einer oder [4c] Schreiben von Inhalt in eine Datentabelle (26),
[3d] Lesen des Inhalts von einem Tabellenelement (32) oder [5d] Schreiben von Inhalt in ein Tabellenelement (32),
[5a] Hinzufügen oder [6a] Löschen von einem Datencontainer (20),
in einem Datencontainer (20), [5b] Hinzufügen oder [76] Löschen von einem Datenkopf (24),
in einem Datencontainer (20), [5c] Hinzufügen oder [6c] Löschen von einer Datentabelle (26),
in einem Datenkopf (24), [5d] Hinzufügen oder [6d] Löschen von einem Verweis auf eine Datentabelle (26), oder
in einer Datentabelle (26), [5e] Hinzufügen oder [6e] Löschen von einer strukturierten Anordnung (30) von Tabellenelementen (32).

14. Datensystem gemäß Anspruch 12 oder 13, wobei jeder einzelne Datencontainer (20), jede einzelne Datentabelle (26), jeder einzelne Datenkopf (24) und/oder jedes typisierte Tabellenelement (32) zumindest einer ersten Verschlüsselung unterliegt, die dahingeht, dass auf den Datencontainer (20), die Datentabelle (26), den Datenkopf (24) und/oder das Tabellenelement (32) nur über eine Programmfunktion (42) aus der Programmbibliothek (40) zugegriffen werden kann.

15. System gemäß Anspruch 14, wobei mindestens ein Datencontainer (20), eine Datentabelle (26), ein Datenkopf (24) und/oder ein Tabellenelement (32) einer doppelten Verschlüsselung unterliegt, wobei die zweite Verschlüsselung dahingeht, einen Schutz gegen nicht-autorisierte Benutzung von Nutzerdaten (34) zu gewährleisten, und wobei der Schlüssel zum Entschlüsseln der zweiten Verschlüsselung in einem Methodenmodul (42) der Programmbibliothek (40) oder in einer Datenanwendung (14) abgelegt ist.

16. System gemäß einem der Ansprüche 12 bis 15, wobei zum inhaltlichen Editieren ein Datencontainer (20), eine Datentabelle (26), ein Datenkopf (24) und/oder ein Tabellenelement (32) nur mit einem Bearbeitungswerkzeug bearbeitet werden kann, welches gewährleistet, dass eine jeweilige in der Auszeichnungssprache XML dargestellte Struktur erhalten bleibt.

17. System gemäß einem der Ansprüche 12 bis 16, wobei mindestens zwei Datenanwendungen (14) in zwei verschiedenen Anwendungsspeichereinrichtungen (12) ausführbar abgelegt sind.

18. System gemäß einem der Ansprüche 12 bis 17, wobei die Programmbibliothek (40) in einer gesonderten Bibliothekspeichereinrichtung (38) abgelegt ist, in der nicht irgendeine der Datenanwendungen (14) abgelegt ist.

19. System gemäß einem der Ansprüche 12 bis 18, wobei von mindestens einer Programmfunktion (42) der Programmbibliothek (40), die einer oder mehreren bestimmten Datenanwendungen (14) zugeordnet ist, eine Kopie in einer Anwendungsspeichereinrichtung (12) ausführbar ist, in der die bestimmte Datenanwendung (14) abgelegt ist.

20. System gemäß einem der Ansprüche 13 bis 19, wobei für die Funktion [3a] vorgesehen ist, dass der gelesene Inhalt in einen externen Datenspeicher exportiert wird, und für die Funktion [4a] vorgesehen ist, dass der geschriebene Inhalt vor dem Schreiben aus einem externen Datenspeicher importiert wird.
